(19) Europäisches Patentamt
European Patent Office
Office européen des brevets

(11) EP 1 619 692 B1

(12) **EUROPEAN PATENT SPECIFICATION**

(45) Date of publication and mention of the grant of the patent:
**09.02.2011 Bulletin 2011/06**

(21) Application number: **04729222.2**

(22) Date of filing: **23.04.2004**

(51) Int Cl.:
***H01B 1/06*** *(2006.01)* ***H01M 8/02*** *(2006.01)*
***H01M 8/10*** *(2006.01)*

(86) International application number:
**PCT/JP2004/005885**

(87) International publication number:
**WO 2004/097850 (11.11.2004 Gazette 2004/46)**

(54) **PROTON-CONDUCTIVE FILM, PROCESS FOR PRODUCING THE SAME, AND FUEL CELL EMPOLYING THE PROTON-CONDUCTIVE FILM**

PROTONENLEITFÄHIGER FILM, PROZESS ZU SEINER HERSTELLUNG UND BRENNSTOFFZELLE MIT DEM PROTONENLEITFÄHIGEN FILM

FILM CONDUCTEUR DE PROTONS, PROCEDE DE PRODUCTION DE CE FILM ET PILE A COMBUSTIBLE UTILISANT CE FILM CONDUCTEUR DE PROTONS

(84) Designated Contracting States:
**DE FR GB**

(30) Priority: **25.04.2003 JP 2003122766**
**16.01.2004 JP 2004009471**

(43) Date of publication of application:
**25.01.2006 Bulletin 2006/04**

(73) Proprietor: **SEKISUI CHEMICAL CO., LTD.**
**Osaka-shi,**
**Osaka 530-8565 (JP)**

(72) Inventors:
- **MIYAMA, Toshihito**
**Tsukuba-shi,**
**Ibaraki 300-4292 (JP)**
- **SUGIMOTO, Toshiya**
**Tsukuba-shi,**
**Ibaraki 300-4292 (JP)**
- **NOMURA, Shigeki**
**Tsukuba-shi,**
**Ibaraki 300-4292 (JP)**

(74) Representative: **Zimmermann, Gerd Heinrich et al**
**Zimmermann & Partner**
**Postfach 330 920**
**80069 München (DE)**

(56) References cited:
**EP-A- 0 771 589**
**EP-A- 1 223 632**
**WO-A-03/026051**
**WO-A1-02/47801**
**JP-A- 10 503 788**
**JP-A- 2001 035 509**
**JP-A- 2002 309 016**

EP 1 619 692 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

<Technical Field>

The present invention relates to a proton conducting membrane, a method for producing the same and a fuel cell using the same and more particularly to a proton conducting membrane which is excellent in heat resistance, dimensional stability, fuel barrier properties, etc. and exhibits an excellent protonic conductivity even at high temperatures, a method for producing the same and a fuel cell which can cope with high temperature operation or direct supply of fuel (e.g., methanol) by using the same.

<Background Art>

In recent years, a fuel cell has been noted as a next-generation electricity-generating device which can contribute to the solution to environmental issue and energy issue, which are socially great problems, because it exhibits a high electricity generating efficiency and excellent environmental properties.

Fuel cells are normally divided into several types by the kind of electrolyte, and among these types, the polymer electrolyte fuel cell (hereinafter occasionally referred to as "PEFC") has a small size and a high performance as compared with any other types of fuel cells and has been regarded as a next-generation mainstream of electric supply such as small-scale on-site electric supply, electric supply for mobile body (e.g., power source for vehicle) and electric supply for portable devices and extensively developed for practical use.

PEFC normally used hydrogen as a fuel. Hydrogen decomposes proton (hydrogen ion) and electron in the presence of a catalyst disposed on the anode side of PEFC. Among these components, the electron is supplied to the exterior where it is then used as electricity and then circulated to the cathode side of PEFC. On the other hand, the proton is supplied to a proton conducting membrane (electrolyte membrane) through which it moves to the cathode side. On the cathode side, the proton, the electron which has been circulated and oxygen which has been introduced from the exterior are combined in the presence of a catalyst to produce water. In other words, as viewed singly, PEFC is a very clean energy source which allows electricity to be drawn when water is produced from hydrogen and oxygen.

As the fuel for fuel cell there is normally used hydrogen, but a fuel cell which directly uses a fuel other than hydrogen by directly introducing an alcohol, ether, hydrocarbon or the like thereinto so that proton and electron are drawn from such a fuel in the presence of a catalyst has been extensively studied. A representative example of such a fuel cell is a direct methanol fuel cell (hereinafter occasionally referred to as "DMFC") which uses methanol (normally in the form of aqueous solution) as a fuel.

Herein, the proton conducting membrane acts to transmit proton produced on the anode to the cathode side. As mentioned above, the movement of proton occurs in cooperation with the flow of electron. In other words, in order that PEFC might give a high output (i.e., high current density), it is necessary that protonic conduction be conducted at a high rate in a sufficient amount. Accordingly, it is no exaggeration to say that the performance of the proton conducting membrane is a key material that determines the performance of PEFC. Further, the proton conducting membrane acts to not only conduct proton but also play a role as an insulating membrane that electrically insulates the anode off the cathode and a fuel barrier membrane that prevents the fuel supplied to the anode side from leaking to the cathode side.

The main proton conducting membrane which is now used in PEFC is a fluororesin-based membrane comprising a perfluoroalkylene as a main skeleton and partly having a sulfonic acid group at the end of perfluorovinylether side chain. As such sulfonated fluororesin-based membranes there are known, e.g., Nafion (trade name) membrane (Du Pont Inc.; see US Patent, 3.282.875, Dow membrane (Dow Chemical Inc.; see JP-A-4-366137), Aciplex (trade name) membrane (Asahi Kasei Corporation; see JP-A-6-342665), Flemion (trade name) membrane (ASAHI GLASS COMPANY), etc.

It is said that these fluororesin-based membranes have a glass transition temperature (Tg) in the vicinity of 130°C under wet conditions where fuel cells are used, and in the vicinity of this temperature, so-called creep occurs, resulting in the change of the structure of the proton conducting membrane in the membrane and hence making it impossible for the proton conducting membrane to exhibit a stable protonic conductivity. Further, the memberane degenerates to swollen state and becomes a jelly-like material that can easily be destroyed to cause failure in the fuel cell.

For the aforementioned reasons, the maximum temperature of present use at which the fuel cell can be stably used over an extended period of time is normally regarded as 80°C.

In its principle, a fuel cell uses chemical reaction and thus exhibits a higher energy efficiency when operated at high temperatures. In other words, as viewed on the basis of the same electricity output, a device which can be operated at high temperatures can be reduced more in size and weight. Further, when the fuel cell is operated at high temperatures, its exhaust heat, too, can be utilized, allowing so-called cogeneration (combined supply of heat and electricity) that drastically enhances the total energy efficiency. Accordingly, it is considered that the operating temperature of a fuel cell is somewhat higher, normally 100°C or more, particularly preferably 120°C or more.

Further, in the case where hydrogen which has not been thoroughly purified is supplied into a fuel cell, the catalyst used on the anode side can be deactivated by impurities (e.g., carbon monoxide) in the fuel (so-called catalyst poisoning), raising a great problem that governs the life of PEFC. It is known that this catalyst poisoning, too, can be avoided when the fuel cell can be operated at high temperatures, and in this respect, too, it is preferred that the fuel cell be operated at higher temperatures. Further, when the fuel cell can be operated at higher temperatures, there is no necessity of using a purified product of noble metal such as platinum, which has heretofore been used, as the catalyst, making it possible to use an alloy of various metals to great advantage from the standpoint of cost or resources.

Thus, although it is considered desirable from various standpoints of view that PEFC is operated at higher temperatures, the heat resistance of the proton conducting membrane is up to 80°C as previously mentioned and the operating temperature of the fuel cell, too, is thus limited to 80°C at present.

By the way, the reaction occurring during the operation of the fuel cell is an exothermic reaction, and when the fuel cell is operated, the temperature in PEFC then spontaneously rises. However, since Nafion, which is a representative proton conducting membrane of present use, has so heat-resistant as to withstand 80°C at highest, it is necessary that PEFC be cooled so that the temperature thereof doesn't rise to 80°C or more. Cooling is normally accomplished by water cooling, and PEFC is devised at the separator portion thereof for cooling. When provided with such cooling means, PEFC is large-sized and heavy as a whole, making it impossible to make sufficient use of small size and light weight, which are inherent characteristics of PEFC. In particular, when the critical operating temperature is 80°C, effective cooling is made difficult in the water cooling system, which is the simplest cooling means. When operation can be made at 100°C or more, the heat can be utilized to evaporate water, making effective cooling, and the circulation of water makes it possible to drastically reduce the amount of water to be used during cooling and hence attain the reduction of size and weight of the device. Since the comparison of temperature control at 100°C or more with temperature control at 80°C in the case where the fuel cell is used as an energy source for vehicle shows that the capacity of radiator and cooling water can be drastically reduced, PEFC which can be operated 100C or more, i.e., proton conducting membrane having a heat resistance to 100°C or more has been keenly desired.

Although PEFC has been required to operate at high temperatures, that is, proton conducting membranes are required to have high temperature resistance from various standpoints of view such as electricity generating efficiency, cogeneration efficiency, cost, resources and cooling efficiency, no proton conducting membranes having both sufficient protonic conductivity and heat resistance exist.

Under these circumstances, in order to raise the operating temperature of PEFC, various heat-resistant proton conducting materials have been studied and proposed to date.

A representative example of these heat-resistant proton conducting materials is a heat-resistant aromatic polymer material that substitutes for the conventional fluorine-based membranes, and examples of such a heat-resistant aromatic polymer material include polybenzimidazoles (see JP-A-9-110982), polyethersulfones (see JP-A-10-21943 and JP-A-10-45913), polyether ether ketones (see JP-A-9-87510), etc.

These aromatic polymer materials are advantageous in that they undergo little structural change at high temperatures, but on the other hand, most of them have sulfonic acid groups, carboxylic acid groups, etc. incorporated directly in the aromatic group, and in this case, they can undergo remarkable desulfonation or decarboxylation at high temperatures and thus are not suitable for high temperature-working membrane.

Further, these aromatic polymer materials often don't have an ion channel structure (described later) as the fluororesin-based membrane, and as a result, it is necessary that a number of acid groups be introduced to obtain sufficient protonic conductivity, raising a problem that they exhibit deteriorated heat resistance or hot water resistance and can be dissolved in hot water in some cases. Further, when water exists, the entire membrane tends to swell remarkably as the fluororesin-based membrane does, and due to the change of the size of the membrane, stress is applied to the junction of the membrane-electrode assembly, making it very likely that the membrane and the electrode can be exfoliated at the junction or the membrane can be broken, and there rises a problem that the reduction of strength of the membrane due to swelling can cause membrane destruction. Further, since all these aromatic polymer material are polymer compounds which stay rigid when dried, there rises a problem that the membrane can undergo destruction or the like during the formation of membrane-electrode assembly.

In order to solve these problems, as proton conducting membranes there have been proposed the following inorganic materials. For example, Minami et al obtained proton conducting inorganic materials by incorporating various acids in a hydrolyzable silyl compound (see "Solid State Ionics", vol. 74, page 105, 1994). However, these inorganic materials exhibit stable protonic conductivity even at high temperatures but can easily crack when used as thin film and thus can be difficultly handled and assembled to a membrane-electrode assembly.

In order to overcome these problems, a method which comprises grinding a proton conducting inorganic material, and then mixing the material thus ground with an elastomer (see JP-A-8-249923), a method which comprises mixing the material thus ground with a sulfonic acid group-containing polymer (see JP-A-10-69817), etc. for example have been attempted, but since these methods only involve the mixing of a polymer material as a binder with an inorganic crosslinked material, the mixture has no great difference in basic thermal properties from polymer material alone and

thus undergoes structural change of polymer material at high temperatures and doesn't exhibit stable protonic conductivity and high protonic conductivity in many cases.

Further, JP-A-10-92444 (: US Patent 6,242,135) reports a composite obtained by incorporating a solid electrolyte in a stretched formed porous polytetrafluoroethylene product having open cells the inner surface of which is coated with a metal oxide. However, such a composite requires a complicated producing step and thus is economically undesirable, and since the metal oxide conducting agent and the formed product as support differs greatly in physical properties, it is thought that the adhesion of the conducting agent to the support and the stability as membrane leave something to be desired. Further, in the examples, silica gel is exemplified as metal oxide, but silica gel is poor in flexibility and thus is considered to give obstruction during subsequent working.

Further, JP-A-2002-358979 reports a polymer solid electrolyte composite membrane comprising a porous membrane made of a metaphenylene isophthalamide-based polymer having a large number of uniform micropores formed on the surface and interior thereof and a polymer solid electrolyte material incorporated in the pores. Such a membrane is advantageous in that it enhances the mechanical strength, but the metaphenylene isophthalamide-based polymer is short of resistance to oxidation and resistance to strong acid under high temperature and high humidity conditions, possibly causing the destruction of the membrane or the like during prolonged use. Further, when a polymer solid electrolyte conductor made of a perfluororesin is used, creep occurring with high temperature-working fuel cells at high temperatures and swelling and dissolution by fuel occurring with direct fuel type fuel cells cannot be essentially inhibited.

Further, JP-A-2002-83612 reports an electrolyte membrane obtained by forming a proton conducting polymer having its one end bonded on the surface of pores in a porous substrate which swells with an organic solvent and water, and then filling a second proton conducting polymer which is the same as or different from the first polymer in the pores. There is no detailed definition to the porous substrate, but any one of ceramic, glass and alumina or composite material thereof, polytetrafluoroethylene or polyimide is proposed. Concerning inorganic materials such as ceramic, glass and alumina among these materials, the substrate itself is a brittle material and thus doesn't exert a great effect of reinforcing the membrane when used as a support. Further, in the case where a heat-resistant polymer such as polytetrafluoroethylene and polyimide is used, it can be difficultly bonded to a chemically inert material such as polytetrafluoroethylene and, even if bonded, it is very likely that the bonded product can be easily dissociated, making it difficult to provide a stable membrane. Further, the heat-resistant polymer such as polyimide leaves something to be desired in oxidation stability and acid resistance and similarly can difficultly form a stable membrane.

As has been mentioned above, no single materials satisfying all requirements for protonic conductivity, heat resistance, oxidation resistance, swelling resistance, acid resistance, mechanical strength, etc. have ever been known. Further, a material obtained by compositing a plurality of materials or a support having open cells comprising a conducting agent incorporated therein is advantageous in that it enhances the mechanical strength and prevents swelling with hot water, but since the affinity between the conducting agent and the support runs short or one of the two components has a low durability, it can lead to interfacial exfoliation or destruction.

Although various electrolyte membrane materials have been researched and developed to eliminate the problems with the conventional polymer electrolyte fuel cells as mentioned above, no proton conducting membranes having sufficient durability at high temperatures (e.g., 100°C or more) and satisfying various desired physical properties such as mechanical strength have ever existed to date.

On the other hand, in DMFC, which uses methanol as a fuel instead of hydrogen, methanol is brought into direct contact with the membrane. Sulfonated fluororesin-based membranes which are used at present, e.g., Nafion (trade name) exhibit a high affinity for methanol, and when the membrane absorbs methanol, it extremely swells and, in some cases, dissolves, causing failure in the fuel cell. Further, methanol leaks to the oxygen electrode side, causing drastic drop of the performance of the fuel cell. Since an organic polymer electrolyte essentially exhibits a high affinity for a protic solvent such as methanol, it can unavoidably undergo permeation, swelling and dissolution, raising a great problem with the development of DMFC. In order to prevent permeation, swelling and dissolution, inorganic electrolytes have been studied, but inorganic electrolytes are brittle as previously mentioned and thus can be difficultly disposed in fuel cells as they are.

In order to eliminate permeation, swelling and dissolution of organic electrolytes or improve the mechanical strength of inorganic electrolytes, the composition of a plurality of materials, the incorporation of an electrolyte in a porous material, etc. have been studied as in high temperature-working membranes, but the organic electrolytes are disadvantageous in that when the essential permeation, swelling and dissolution are eliminated, the protonic conductivity thereof is lowered and the inorganic electrolytes are disadvantageous in that no supports which enhance the mechanical strength and exhibit a good affinity for inorganic electrolytes exist. Therefore, no efficient and durable membranes exist at present also for DMFC.

<Disclosure of the Invention>

An object of the present invention is to provide a proton conducting membrane which is excellent in heat resistance, durability, dimensional stability, fuel barrier properties, etc. and exhibits an excellent protonic conductivity even at high temperatures to solve problems with conventional polymer electrolyte fuel cells, a method for producing the same and a fuel cell which cope with high temperature operation or direct supply of fuel (e.g., methanol) by using the same.

Further, another object of the present invention is to provide a method of producing a proton conducting membrane which can economically and effectively produce the aforementioned proton conducting membrane of the present invention.

Further, a further object of the present invention is to provide a fuel cell which comprises the aforementioned proton conducting membrane of the present invention and thus can stably operate at high temperatures.

The present inventors made extensive studies in the light of the aforementioned problems, and as a result of studies of various electrolyte membrane materials, it was found that when a support (α) having an open-cell structure which is a crosslinked structure having a specific organic-inorganic composite structure is filled with a proton conducting structure (β) as an essential component constituting the membrane, a proton conducting membrane having excellent durability, dimensional stability, fuel barrier properties, etc. can be obtained, and the present invention has been worked out.

In other words, in accordance with the first aspect of the present invention, a proton conducting membrane comprising a support filled with a proton conducting structure (β) comprising an acid-containing structure containing an acid group, the support comprising an organic-inorganic composite structure (α) having a crosslinked structure formed by a metal-oxygen bond and an open-cell structure having internally-formed pores connected continuously to each other by said crosslinked structure, is provided.

Further, in accordance with the second aspect of the present invention, a proton conducting membrane as mentioned above is provided, wherein the ratio of the number of metallic atoms to carbon atoms in the organic-inorganic composite structure (α) falls within a range of from 2 : 1 to 1 : 25.

Further, in accordance with the third aspect of the present invention, a proton conducting membrane as mentioned above is provided, wherein the metallic atom in the aforesaid organic-inorganic composite structure (α) is silicon atom.

Further, in accordance with the fourth aspect of the present invention, a proton conducting membrane as mentioned above is provided, wherein the porosity of the aforesaid open-cell structure falls within a range of from 20 to 95% by volume based on the support comprising the organic-inorganic composite structure (α).

Further, in accordance with the fifth aspect of the present invention, a proton conducting membrane as mentioned above is provided, wherein a diameter of the pores is from 0.01 to 10 μm.

Further, in accordance with the sixth aspect of the present invention, a proton conducting membrane as mentioned above is provided, wherein the organic-inorganic composite structure (α) comprises at least a structure represented by the following formula (1) :

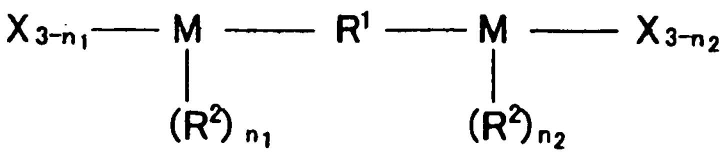

・・・(1)

wherein M represents a silicon atom; X represents -O-bond taking part in crosslinking or OH group; $R^1$ represents a $C_1$-$C_{50}$ carbon atom-containing molecular chain; $R^2$ represents a methyl, ethyl, propyl or phenyl group; and n1 and n2 each represent 0, 1 or 2, with the proviso that at least one of n1 and n2 represents 1 or 2.

Further, in accordance with the seventh aspect of the present invention, a proton conducting membrane as mentioned above is provided, wherein the number of the groups X taking part in the crosslinking of the organic-inorganic composite structure (α) represented by the aforesaid chemical formula (1) is represented by the following numerical formula (II):

$$\sum_{i=1}^{P} m_i\{6-(n_1^i+n_2^i)\}=a$$

a: 2.9<a<3.5 ... (II)

wherein P is the number of the kinds of the compound corresponding to the chemical formula (1) contained in the organic-inorganic composite structure (α) which is an integer of 1 or more; i represents an integer of from 1 to P; $n1^i$ and $n2^i$ represent n1 and n2 in the aforesaid formula (1) in the organic-inorganic composite structure (α)i, respectively, which each are 0, 1 or 2, with the proviso that at least one of $n1^i$ and $n2^i$ is 1 or 2; and $m_i$ represents a molar fraction.

Further, in accordance with the eighth aspect of the present invention, a proton conducting membrane as mentioned above is provided, wherein a in the numerical formula (II) is 3.0.

Further, in accordance with the ninth aspect of the present invention, a proton conducting membrane as mentioned above is provided, wherein the proton conducting structure (β) has a crosslinked structure formed by metal-oxygen atom and comprises an acid group-containing structure (A) represented by the following formula (3):

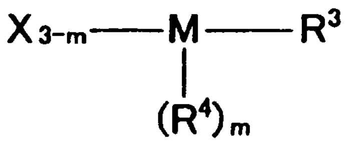

... (3)

wherein M represents a silicon atom; X represents -O-bond taking part in crosslinking or OH group; $R^3$ represents a molecular chain having at least one acid group; $R^4$ represents any of methyl, ethyl, propyl and phenyl groups; and m represents 0, 1 or 2.

Further, in accordance with the tenth aspect of the present invention, a proton conducting membrane as mentioned above is provided, wherein $R^3$ in the formula (3) is a structure represented by the following formula (12):

$-(CH_2)_n-SO_3H$ (12)

wherein n represents an integer of from 1 to 20.

Further, in accordance with the eleventh aspect of the present invention, a proton conducting membrane as mentioned above is provided, wherein the proton conducting structure (β) comprises a metal-oxygen bond structure (B) connected to the structure of the formula (3) by a metal-oxygen bond besides the acid group-containing structure represented by the formula (3).

Further, in accordance with the twelfth aspect of the present invention, a proton conducting membrane as mentioned above is provided, wherein the metal-oxygen bond structure (B) comprises an organic-inorganic composite structure (2) represented by the following formula:

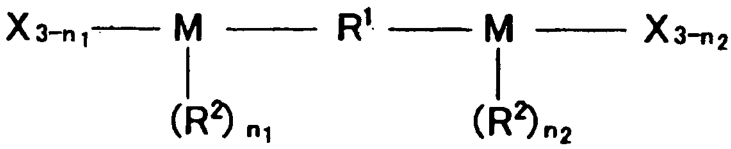

... (2)

wherein M represents a silicon atom; X represents -O-bond taking part in crosslinking or OH group; $R^1$ represents a $C_1$-$C_{50}$ carbon atom-containing molecular chain; $R^2$ represents any of methyl, ethyl, propyl and phenyl groups; and n1 and n2 each represent 0, 1 or 2.

Further, in accordance with the thirteenth aspect of the present invention, a proton conducting membrane as mentioned above is provided, wherein the metal-oxygen bond structure (B) comprises a structure represented by the following formula (6):

$$M(R^2)_m(X)_{4-m} \qquad (6)$$

wherein M represents a metallic atom; X represents -O-bond taking part in crosslinking or OH group; $R^2$ represents any of methyl, ethyl, propyl and phenyl groups; and m represents 0, 1 or 2.

Further, in accordance with the fourteenth aspect of the present invention, a proton conducting membrane as mentioned above is provided, wherein M in the formula (6) is a silicon atom.

Further, in accordance with the fifteenth aspect of the present invention, a proton conducting membrane as mentioned above is provided, wherein m in the formula (6) is 0.

For example, a tetrafunctional metal (tetraalkoxysilane, etc.) is effective.

Further, in accordance with the sixteenth aspect of the present invention, a method of producing a proton conducting membrane as mentioned above is provided, wherein the organic-inorganic composite structure (α) is produced by a method comprising a step of preparing a mixture containing an organic-inorganic composite crosslinkable compound (C) terminated by a crosslinkable silyl group and a carbon group covalently connected thereto, a step of forming said mixture into a film and a step of subjecting the crosslinkable silyl group contained in the mixture thus film-formed to hydrolysis and/or condensation.

Further, in accordance with the seventeenth aspect of the present invention, a method of producing a proton conducting membrane as mentioned above, wherein the organic-inorganic composite crosslinkable compound (C) is represented by the following formula (4):

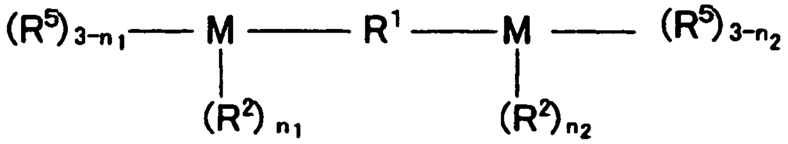

. . . (4)

wherein M represents a silicon atom; $R^1$ represents a $C_1$-$C_{50}$ carbon atom-containing molecular chain; $R^2$ represents any of methyl, ethyl, propyl and phenyl groups; $R^5$ represents any of Cl, OH, $OCH_3$, $OC_2H_5$, $OC_3H_7$, $OC_4H_9$, $OC_6H_5$ and $OCOCH_3$; and n1 and n2 each represent 0, 1 or 2, with the proviso that at least one of n1 and n2 is 1 or 2.

Further, in accordance with the eighteenth aspect of the present invention, a method of producing a proton conducting membrane as mentioned above, wherein the number of hydrolyzable groups in the organic-inorganic composite crosslinkable compound (C) represented by the aforesaid formula (4) is represented by the following numerical formula (II):

$$\sum_{i=1}^{P} m_i\{6-(n_1^i+n_2^i)\}=a \qquad a:\ 2.9<a<3.5 \qquad \ldots \text{(II)}$$

wherein P is the number of the kinds of the organic-inorganic composite crosslinkable compound (C) which is an integer of 1 or more; i represents an integer of from 1 to P; $n1^i$ and $n2^i$ represent n1 and n2 in the formula (4) in the organic-inorganic composite crosslinkable compound (C)i, respectively, which each are 0, 1 or 2, with the proviso that at least one of $n1^i$ and $n2^i$ is 1 or 2; and $m_i$ represents a molar fraction.

Further, in accordance with the nineteenth aspect of the present invention, a method of producing a proton conducting membrane as mentioned above, wherein a in the numerical formula (II) is 3.0.

Further, in accordance with the twentieth aspect of the present invention, a method of producing a proton conducting membrane as mentioned above, further comprising a step of adding a catalyst in an amount arranged such that water is present in an amount of from 0.5 to 1.5 equivalents to the crosslinkable silyl group in the organic-inorganic composite crosslinkable compound (C).

Further, in accordance with the twenty first aspect of the present invention, a method of producing a proton conducting membrane as mentioned above, wherein a Brønsted acid is used as a catalyst during the hydrolysis of the crosslinkable silyl group in the organic-inorganic composite crosslinkable compound (C).

Further, in accordance with the twenty second aspect of the present invention, a method of producing a proton conducting membrane as mentioned above, further comprising a step of mixing the organic-inorganic composite crosslinkable compound (C) with a solvent in an amount of from 0.5 to 10 ml per g of the solid content of the organic-inorganic composite crosslinkable compound (C).

Further, in accordance with the twenty third aspect of the present invention, a method of producing a proton conducting membrane as mentioned above, wherein the proton conducting membrane is produced by a method comprising a step of filling the organic-inorganic composite structure ($\alpha$) with a mixture comprising an acid group-containing compound (D) containing at least a crosslinkable silyl group and an acid group and then subjecting the crosslinkable silyl group contained in the mixture which has thus filled the structure ($\alpha$) to hydrolysis and/or condensation to form a crosslinked structure of proton conducting structure ($\beta$) inside the organic-inorganic composite structure ($\alpha$)

Further, in accordance with the twenty fourth aspect of the present invention, a method of producing a proton conducting membrane as mentioned above, wherein the acid group-containing compound (D) has a structure represented by the following formula (7):

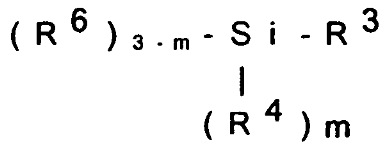

(7)

wherein $R^6$ represents any of OH, $OCH_3$, $OC_2H_5$ and $OC_3H$; $R^3$ represents a molecular chain having at least one acid group; $R^4$ represents any of methyl, ethyl, propyl and phenyl groups; and m represents 0, 1 or 2.

Further, in accordance with the twenty fifth aspect of the present invention, a method of producing a proton conducting membrane as mentioned above, wherein the acid group-containing compound (D) comprises one having a structure represented by the following formula (8):

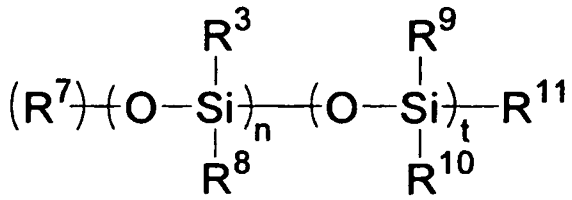

(8)

wherein $R^3$ represents a molecular chain having at least one acid group; $R^7$ represents a group selected from the group consisting of H, $CH_3$, $C_2H_5$, $C_3H_7$, $C_4H_9$ and $C_6H_5$ which may have a branched structure that partly constitutes -Si bond or an intramolecular annular structure; $R^8$, $R^9$, $R^{10}$ and $R^{11}$ each represent a group selected from the group consisting of $R^3$, OH, $OCH_3$, $OC_2H_5$, $OC_3H_7$, $OC_4H_9$, $OC_6H_5$, $CH_3$, $C_2H_5$, $C_3H_7$, $C_4H_9$ and $C_6H_5$ that partly constitutes -OSi bond or an intramolecular annular structure; n represents an integer of from 1 to 50; t represents an integer of from 0 to 50, with the proviso that the sum of n and t is not greater than 100; and the compound may be a combination of compounds wherein n and t are the same or different. In other words, this means that the compound may be in the form of random copolymer-like or block copolymer-like structure as expressed in terms of polymer.

Further, in accordance with the twenty sixth aspect of the present invention, a method of producing a proton conducting membrane as mentioned above, wherein $R^3$ in the formula (7) or (8) is a structure represented by the following formula (12):

$$-(CH_2)_n-SO_3H \qquad (12)$$

wherein n represents an integer of from 1 to 20.

Further, in accordance with the twenty seventh aspect of the present invention, a method of producing a proton conducting membrane as mentioned above, wherein the mixture filling the organic-inorganic composite structure ($\alpha$) comprises a crosslinkable compound (F) represented by the following formula (16) besides the acid group-containing compound (D) containing a crosslikable silyl group and an acid group:

$$M(R^2)_m(R^5)_{4-m} \qquad (16)$$

wherein M represents a metallic atom; $R^5$ represents any of OH, $OCH_3$, $OC_2H_5$, $OC_3H_7$, $OC_4H_9$, $OC_6H_5$, Cl and $OCOCH_3$; $R^2$ represents any of methyl, ethyl, propyl and phenyl groups; and m represents 0, 1 or 2.

Further, in accordance with the twenty eighth aspect of the present invention, a method of producing a proton

conducting membrane as mentioned above, wherein the proton conducting membrane (β) is produced by a method comprising a step of filling the organic-inorganic composite structure (α) with a mixture comprising an acid group precursor-containing compound (E) containing at least a crosslinkable silyl group and an acid precursor group capable of being converted to an acid group and then subjecting the crosslinkable silyl group contained in the mixture which has thus filled the structure (α) to hydrolysis and/or condensation to form a crosslinked structure and a step of subjecting the acid group precursor in the acid group precursor-containing compound (E) to oxidation and/or hydrolysis to produce an acid group, thereby forming a proton conducting structure (β) having an acid group inside the organic-inorganic composite structure (α).

Further, in accordance with the twenty ninth aspect of the present invention, a method of producing a proton conducting membrane as mentioned above, wherein the acid group precursor-containing compound (E) has a structure represented by the following formula (17):

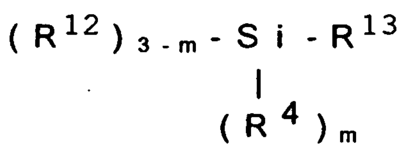

(17)

wherein $R^{12}$ represents any of OH, $OCH_3$, $OC_2H_5$ and $OC_3H_7$; $R^{13}$ represents a molecular chain having at least one acid group precursor; $R^4$ represents any of methyl, ethyl, propyl and phenyl groups; and m represents 0, 1 or 2.

Further, in accordance with the thirtieth aspect of the present invention, a method of producing a proton conducting membrane as mentioned above, wherein the acid group precursor-containing compound (E) has a structure represented by the following chemical formula (13):

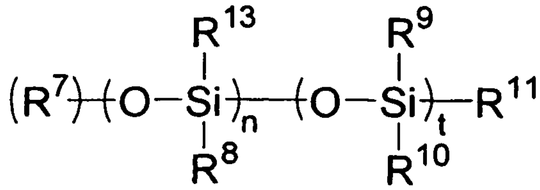

(13)

wherein $R^{13}$ represents a molecular chain having at least one acid group precursor; $R^7$ represents a group selected from the group consisting of H, $CH_3$, $C_2H_5$, $C_3H_7$, $C_4H_9$ and $C_6H_5$ which may have a branched structure that partly constitutes -Si bond or an intramolecular annular structure; $R^8$, $R^9$, $R^{10}$ and $R^{11}$ each represent a group selected from the group consisting of $R^{13}$, OH, $OCH_3$, $OC_2H_5$, $OC_3H_7$, $OC_4H_9$, $OC_6H_5$, $CH_3$, $C_2H_5$, $C_3H_7$, $C_4H_9$ and $C_6H_5$ that partly constitutes -OSi bond or an intramolecular annular structure; n represents an integer of from 1 to 50; t represents an integer of from 0 to 50, with the proviso that the sum of n and t is not greater than 100; and the compound may be a combination of compounds wherein n and t are the same or different. In other words, this means that the compound may be in the form of random copolymer-like or block copolymer-like structure as expressed in terms of polymer.

Further, in accordance with the thirty first aspect of the present invention, a method of producing a proton conducting membrane as mentioned above, wherein $R^3$ in the formula (13) or (17) is a structure represented by the following formula (15):

$$-(CH_2)_n-SH \qquad (15)$$

wherein n represents an integer of from 1 to 20.

Further, in accordance with the thirty second aspect of the present invention, a method of producing a proton conducting membrane as mentioned above, wherein the proton conducting structure (β) filling the organic-inorganic composite structure (α) comprises a crosslinkable compound (F) represented by the following formula (14) besides the acid group precursor-containing compound (E):

$$M(R^2)_m(R^6)_{4-m} \qquad (14)$$

wherein M represents a metallic atom; $R^6$ represents any of OH, $OCH_3$, $OC_2H_5$, $OC_3H_7$, $OC_4H_9$, $OC_6H_5$, Cl and $OCOCH_3$; $R^2$ represents any of methyl, ethyl, propyl and phenyl groups; and m represents 0, 1 or 2.

A fuel cell of the thirty third aspect of the present invention comprises the aforesaid proton conducting membrane of the present invention.

The proton conducting membrane of the present invention is excellent in heat resistance, durability, dimensional stability, fuel barrier properties, flexibility, etc. and can be fairly used even at high temperatures and the operating temperature of a polymer electrolyte fuel cell, which has recently been noted, in fuel cells comprising such a proton conducting membrane can be thus raised to 100°C or more.

As a result, the enhancement of electricity generating efficiency and the elimination of CO poisoning of catalyst can be attained. Further, the rise of the operating temperature can be presumably developed to cogeneration system involving the utilization of heat and can be expected to lead to drastic enhancement of energy efficiency.

Further, the proton conducting membrane of the present invention is excellent in durability, dimensional stability, fuel barrier properties, flexibility, etc. and thus can be fairly used even in direct fuel type fuel cells such as DMFC and can be expected to be used in portable devices, etc. over an extended period of time.

Further, the method of producing a proton conducting membrane of the present invention is capable of economically and efficiently producing the aforementioned proton conducting membrane of the present invention.

Since the aforementioned organic-inorganic composite structure (α) has a structure represented by the aforementioned formula (1), the adhesion to proton conducting membrane (β) in particular, heat resistance, acid resistance, oxidation resistance and swelling resistance can be enhanced more remarkably.

Further, since the aforementioned proton conducting membrane (β) is composed of an acid group-containing structure (A) represented by the aforementioned formula (3), a stable protonic conductivity can be particularly obtained.

<Brief Description of the Drawings>

Fig. 1 is a diagram illustrating the voltage-current curve of a fuel cell comprising an example of the proton conducting membrane of the present invention, and

Fig. 2 is a diagram illustrating the voltage-current curve of a fuel cell comprising another example of the proton conducting membrane of the present invention.

<Best Mode for Carrying Out the Invention>

The present invention will be described hereinafter with reference to examples, but the present invention is not limited thereto.

1. Organic-inorganic composite structure (α)

1-1) Properties of organic-inorganic composite structure (α)

The proton conducting membrane of the present invention comprises a support filled with a proton conducting structure (β) comprising an acid-containing structure containing an acid group, the support comprising an organic-inorganic composite structure (α) having a crosslinked structure formed by a metal-oxygen bond and an open-cell structure having internally-formed pores connected continuously to each other by the aforesaid crosslinked structure.

Herein, the organic-inorganic composite structure (α) acts to retain the proton conducting structure (β) (hereinafter occasionally referred to as "electrolyte material" or "electrolyte") and enhance the physical properties as membrane. Properties required to support the electrolyte are as follows.

a) To have significant physical properties (strength, flexibility) as support.
b) To be stable under high temperature, high humidity, high concentration acid and oxidative conditions in the operating atmosphere of fuel cell.
c) To be inert and impermeable to fuel (hydrogen, methanol, etc.).
d) To have affinity for and sufficient adhesion to electrolyte material.

Herein, the significant physical properties as support are determined by the physical properties of the electrolyte with which the support is filled. In other words, in the case where the electrolyte is, e.g., a non-crosslinked polymer electrolyte (e.g., perfluoroalkylsulfonic acid polymer-based, sulfonated aromatic polymer), the main roles of the support are prevention of swelling deformation, retention of strength of swollen membrane, etc. and the support is required to

have strength. On the other hand, in the case where the electrolyte is a crosslinked material (e.g., phosphoric acid composite silica crosslinked material, sulfonic acid composite organic-inorganic composite crosslinked material, etc.) and thus is brittle, the main role of the support is to prevent break by stress dispersion and the support is required to have flexibility. Since the organic-inorganic composite structure (α) to be used in the proton conducting membrane of the present invention has both an organic moiety having flexibility and a crosslinked moiety having strength, it can exert a sufficient effect as support for both non-crosslinked polymer electrolyte and crosslinked electrolyte. In particular, this organic-inorganic composite structure (α) can be effectively used as a support for crosslinked electrolyte in high temperature-operating fuel cells or direct fuel supply type fuel cells.

Further, since a fuel cell is effectively used at higher temperature, the support, too, is required to be stable under such high temperature, high humidity, high concentration acid and oxidative conditions. Since the organic-inorganic composite structure (α) of the present invention is a material which is stabilized by a so-called inorganic crosslinking such as metal-oxygen bond, e.g., silicon-oxygen bond, aluminum-oxygen bond, titanium-oxygen bond, zirconium-oxygen bond, it undergoes no dissolution or decomposition even at high temperatures, little swelling even at high humidity and minimized hydrolysis even with a high concentration acid and stays stable even under oxidative conditions and thus can be fairly used in high temperature-operating fuel cells.

Further, since the electricity output of a fuel cell falls when the fuel leaks toward the oxygen electrode (cathode), it is desired that the electrolyte membrane is impermeable to the fuel. In the case where a support and an electrolyte are used as in the present invention, both the support and the electrolyte are required to be capable of blocking the fuel, but since the organic-inorganic composite structure (α) of the present invention has a dense structure developed by inorganic crosslinking, the permeability of the organic-inorganic composite structure (α) to a gaseous fuel such as hydrogen gas can be kept extremely low. Further, even in the case of direct fuel type fuel cells using a liquid fuel such as methanol, dimethyl ether and hydrocarbon, the organic-inorganic composite structure (α) of the present invention undergoes extremely little degeneration and swelling of support by fuel or permeation of fuel due to the dense structure developed by inorganic crosslinking.

Further, the support supporting the electrolyte material has an important requirement that it have an affinity for and a sufficient adhesion to the electrolyte material. In other words, in the case where the support and the electrolyte material have no adhesion to each other, it is likely that the support and the electrolyte material can be exfoliated off each other or can undergo breakage at their interface due to various stresses during the operation of the fuel cell. In the case where such exfoliation or breakage occurs, it is likely that the ion conduction path can be cut by exfoliation or breakage or the fuel can leak through the exfoliated surface. Since the organic-inorganic composite structure (α) of the present invention has both an organic moiety and an inorganic moiety and hence a good affinity for both organic polymer-based electrolyte and inorganic electrolyte and retains a stable form and allows dispersion of stress such as deformation of electrolyte even under the operating conditions of fuel cell as previously mentioned, it has a characteristic that extremely little exfoliation and breakage can occur. In the previously cited JP-A-2002-83612, the support and the electrolyte are formed in combination to assure adhesion, but this method gives limited degree of selection of support and electrolyte and requires activation for combined formation (plasma treatment, etc. in the aforementioned patent publication) and hence a complicated procedure that adds to cost.

On the contrary, the organic-inorganic composite structure (α) of the present invention requires no such a treatment as plasma treatment and thus can be formed at a simple procedure that doesn't add to cost.

1-2) Structure of organic-inorganic composite structure (α)

The organic-inorganic composite structure (α) to be used in the proton conducting membrane of the present invention has a crosslinked structure formed by a metal-oxygen bond and an open-cell structure having internally-formed pores connected continuously to each other by the aforesaid crosslinked structure.

Herein, the ratio of crosslinked structure developed by metal-oxygen bond to organic structure in the organic-inorganic composite structure (α) can be variously selected by the proton conducting structure (β) filling the organic-inorganic composite structure (α) and the operating conditions of the fuel cell (temperature, humidity, fuel supplying method, etc.). The physical properties thus obtained vary with the formulation/structure of crosslinked structure developed by metal-oxygen bond or the formulation/ structure of organic structure and thus cannot be unequivocally predetermined, but in general, the more the crosslinked structure exists, the more are enhanced heat resistance and membrane strength, while the more the organic structure exists, the more the physical properties are riched by flexibility. The ratio of inorganic crosslinked structure to organic structure can be arbitrarily determined by the working conditions and the kind of the electrolyte filling the organic-inorganic composite structure (α), but the ratio of metal atom to carbon atom in the aforementioned organic-inorganic composite structure (α) (metal atom : carbon atom) preferably falls within a range of from 2 : 1 to 1 : 25 as a ratio giving well-balanced inorganic crosslinked structure and organic structure. When the formulation is such that the number of metal atoms is greater than this ratio, the structure (α) becomes too hard and brittle, making it likely that breakage can occur due to stress during provision in the fuel cell or during the operation of the fuel cell.

When breakage occurs, the fuel leaks from the site, making it likely that so-called chemical short can occur to disadvantage. Further, when the formulation is such that the number of carbon atoms is greater than this ratio, the effect of crosslinking is eliminated to deteriorate heat resistance, stability to fuel, etc., making it likely that the structure (α) can undergo degeneration, deformation, etc. during high temperature operation, and the structure (α) undergoes swelling with the fuel, etc., making it likely that the fuel can leak. The ratio of the number of metal atoms to carbon atoms in the organic-inorganic composite structure (α) is practical when it falls within the aforementioned range but is preferably from 1 : 3 to 1 : 15. When the ratio of the number of metal atoms to carbon atoms falls within this range, a flexible structure (α) can be obtained.

Further, as the metal atom to be contained in the aforementioned organic-inorganic composite structure (α) there may be used any metal atom without any limitation so far as it can form a metal-oxygen bond, but among these metal atoms, silicon, aluminum, titanium and zirconium, which can be easily handled, are preferably used. Further, among these metal atoms, silicon can be particularly preferably used because it is particularly inexpensive, exhibits a mild reactivity and can be available in abundant kinds of structures.

Thus, as the crosslinked structure according to the present invention there may be particularly preferably used a silicon-oxygen bond, but the aforementioned metals other than silicon or phosphorus, boron or the like may be additionally used so far as the cost or ease of producing method cannot be sacrificed.

The organic-inorganic composite structure (α) of the present invention may be rendered protonically conductive by complexing with acid group, etc. but is preferably used unrendered protonically conductive taking into account heat resistance, dimensional stability and gas barrier properties. In the case where the structure (α) has no protonic conductivity, the structure (α) is a non-ionically conductive phase, and the protonic conductivity of the entire membrane is thus deteriorated when the volume fraction of the structure (α) in the membrane increases. Accordingly, the volume ratio (porosity; space in which the proton conducting structure (β) is filled) of the open cells possessed by the structure (α) is preferably not smaller than a predetermined ratio. The required pore volume ratio depends on the properties of the electrolyte filling the structure (β) and thus cannot be unequivocally predetermined but preferably falls within a range of from 20 to 95% by volume in some detail. When the pore volume ratio falls below 20% by volume, the amount of the nonionically conductive portion in the membrane is too great to provide the proton conducting membrane of the present invention with a high ionic conductivity. On the contrary, when the pore volume ratio exceeds 95% by volume, the compositing effect of the structure (α) is eliminated, making it impossible to exhibit capability such as reinforcement of electrolyte and dispersion of stress and hence making it likely that the physical properties of the proton conducting membrane can be deteriorated.

Further, the diameter of the open cells in the organic-inorganic composite structure (α) of the present invention preferably falls within a proper range because when it is too great, there can be exerted no effect of reinforcing the electrolyte or dispersing stress while when it is too small, the proton conducting structure (β) can be difficultly filled. The diameter of the open cells preferably falls within a range of from 0.01 to 10 μm, more preferably from 0.05 to 1 μm in the case of the organic-inorganic composite structure (α) of the present invention.

The organic-inorganic composite structure (α) of the present invention comprises an inorganic crosslinked structure developed by metal-oxygen bond and an organic structure as previously mentioned. The inorganic crosslinked structure and the organic structure may or may not be connected to each other but are preferably covalently connected to each other taking into account the stability, performance uniformity, etc. of the structure (α). The connection of the organic structure and the inorganic structure may be made via oxygen atom, etc. as in metal-oxygen-carbon (e.g., Si-O-C), but in this case, these structures can undergo hydrolysis, etc. Accordingly, it is more desirable that the metal and the carbon be directly connected covalently to each other. Examples of such a bond include Si-C bond, Ti-C bond, etc., and among these bonds, those having Si-C bond, which are available in a wide variety of compounds, are particularly preferably used. The compound having Si-C bond is not specifically limited but may be used in the form of mono-, di- or tri-alkylsilane compound.

These alkylsilane compounds can be preferably used particularly when the structure (α) comprises a bridged crosslinked structure having a structure of the following formula (1), that is, these alkylsilane compounds are highly capable of forming an organic-inorganic composite structure (α) satisfying the desired porosity and pore diameter. The reason why the compound of the formula (1) forms such a particularly desirable structure is presumably attributed to the balance of compatibility and reactivity with the solvent used during production.

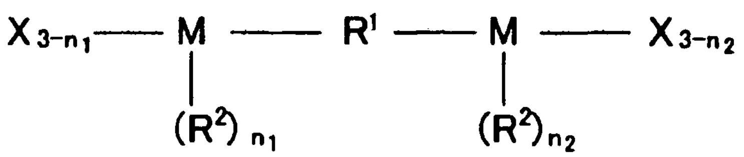
· · · (1)

wherein M represents a silicon atom; X represents -O-bond taking part in crosslinking or OH group; $R^1$ represents a $C_1$-$C_{50}$ carbon atom-containing molecular chain; $R^2$ represents a methyl, ethyl, propyl or phenyl group; and n1 and n2 each represent 0, 1 or 2, with the proviso that at least one of n1 and n2 represents 1 or 2.

It is known that the number of groups taking part in crosslinking has a great effect on porosity, pore diameter, etc. in the bridged crosslinked structure of the chemical formula (1) contained in the structure in the organic-inorganic composite structure ($\alpha$) of the present invention.

In some detail, in the case where the organic-inorganic composite structure ($\alpha$) comprises P kinds of structures represented by the aforementioned formula (1), supposing that the various structures are named 1, 2, ..., i, ..., P, respectively, and the number of the groups $R^2$ in the structure i of the formula (1) are $n1^i$ and $n2^i$, the number of the groups X taking part in crosslinking in the various kinds of structures are represented by $(3-n1^1) + (3-n2^1)$, $(3-n1^2) + (3-n2^2)$, .. , $(3-n1^i) + (3-n2^i)$, ..., $(3-n1^p) + (3-n2^P)$, i.e., $6-(n1^1+n2^1)$, $6-(n1^2+n2^2)$, ..., $6-(n1^i+n2^i)$,..., $6-(n1^p+n2^p)$. Further, supposing that the molar fraction of the various kinds of structures are m1, m2, ..., mi, ..., mp, with the proviso that the sum of m1, m2, ..., mi, ... , mp is 1.0, the number of the groups X taking part in crosslinking of structure is represented by:

$$\sum_{i=1}^{P} m_i\{6-(n_1^i+n_2^i)\}$$

(Numerical formula I)

wherein P is the number of the kinds of the compound corresponding to the chemical formula (1) contained in the organic-inorganic composite structure ($\alpha$) which is an integer of 1 or more; i represents an integer of from 1 to P; $n1^i$ and $n2^i$ represent n1 and n2 in the aforesaid formula (1) in the organic-inorganic composite structure ($\alpha$)i, respectively, which each are 0, 1 or 2, with the proviso that at least one of $n1^i$ and $n2^i$ is 1 or 2; and $m_i$ represents a molar fraction.

Herein, as a result of studies, the present inventors made it clear that when the number n1 and n2 of organic groups in all the compounds corresponds to the chemical formula (1) contained in the organic-inorganic composite structure ($\alpha$) each are from 2.9 to 3.5, a desired structure can be obtained.

When this value is from 2.9 to 3.5, it means that the following numerical formula (II) is satisfied:

$$\sum_{i=1}^{P} m_i\{6-(n_1^i+n_2^i)\} = a$$

$a: 2.9<a<3.5 \quad \ldots \quad (II)$

wherein P is the number of the kinds of the compound corresponding to the chemical formula (1) contained in the organic-inorganic composite structure ($\alpha$) which is an integer of 1 or more; i represents an integer of from 1 to P; $n1^i$ and $n2^i$ represent n1 and n2 in the aforesaid formula (1) in the organic-inorganic composite structure ($\alpha$)i, respectively, which each are 0, 1 or 2, with the proviso that at least one of $n1^i$ and $n2^i$ is 1 or 2; and $m_i$ represents a molar fraction.

In particular, when the numerical formula (II) is 3.0, an open-cell structure can be easily formed, and this value is thus preferably close to 3.0 as much as possible.

Further, the bridged crosslinked structure of the chemical formula (1) may have no crosslinking groups at one terminal and three crosslinking groups at the opposite terminal, but in this case, since an open-cell structure can be difficultly formed, at least one of n1 and n2 is preferably 1 or 2.

When a plurality of bridged crosslinked structures corresponding to the chemical formula (1) having different numbers of crosslinking groups are present in admixture, the value of the aforementioned numerical formula can be easily adjusted, making it possible to adjust the porous structure, flexibility, etc. of the membrane. The desired physical properties can be adjusted also by mixing bridged crosslinked structures having different organic chain lengths, kinds of substituents, etc.

Further, in the chemical formula (1), $R^1$ is a molecular chain having carbon atoms and is capable of controlling the flexibility and crosslink density of the membrane thus obtained. In the case where $R^1$ is free of carbon atom, the compound thus obtained cannot exhibit flexibility or can be unstable, and on the contrary, when the number of carbon atoms is more than 50, crosslinking is insufficiently made, giving insufficient heat resistance, and $R^1$ is thus preferably a carbon atom-containing molecular chain having from 1 to 50, more preferably from 4 to 12 carbon atoms.

Further, $R^1$ is preferably a hydrocarbon chain. This is because if $R^1$ has hetero atoms, the compound can be severed by an acid or heat. On the other hand, $R^1$ which is a hydrocarbon chain is little subject to attack by an acid. Examples of such hydrocarbons include alkylene chains, aromatic group-containing chains, etc. Particularly preferred among these hydrocarbons are straight molecular chains composed of polymethylene chain free of branched chain. The polymethylene chain free of molecular chain indicates a compound represented by the following formula:

$$-(CH_2)_m- \qquad (5)$$

wherein m represents an integer of from 1 to 20.

$R^1$ which is a compound group that is a straight polymethylene chain represented by the chemical formula (5) is stable to attack by an acid, radical or the like and thus can be preferably used as a proton conducting membrane for heat-resistant fuel cells.

Further, since the straight polymethylene chain is a flexible structure, the resulting membrane can be provided with a proper flexibility, making it possible to adjust denseness or the like as well. The adjustment of these properties is affected mainly by the molecular length of the polymethylene chain.

For example, the polymethylene in the aforementioned chemical formula (5) is easily available in the molecular length (m) of from 1 to 20, and such a polymethylene is a structure having a proper flexibility and crosslink density and thus can be preferably used. Further, an octamethylene group wherein m preferably ranges from 4 to 12, e.g., 8 is available in the form of commercial raw material and thus can be preferably used. These polymethylene groups can satisfy all the requirements for heat resistance, flexibility and fuel gas barrier properties.

On the contrary, if $R^1$ has a branched chain, the methine hydrogen in the branched chain is drawn by active radicals developed during operation of fuel cell, making it likely that the branched group can be severed off the compound or an unsaturated bond can be produced to cause further severance by oxidation.

Further, $R^1$ may comprise an aromatic compound group, but if the aromatic group and the silicon atom are directly connected to each other, the aromatic ring can be cationated to cause severance of the aromatic ring off the silicon atom, and in the case where the aromatic group and the silicon atom are connected to each other via methylene group, decomposition or reaction can occur with the benzyl position as an active point during prolonged use.

Even $R^1$ having hetero atoms, aromatic rings and branched structures may be added so far as it doesn't impair the physical properties of the structure ($\alpha$), but $R^1$ is preferably mainly composed of straight-chain methylene, more preferably entirely composed of straight -chain methylene.

As previously mentioned, the organic-inorganic composite structure ($\alpha$) is not limited to bridged crosslinked structure and may be one comprising various metal-oxygen bonds or a metal-oxygen bond and an organic group but preferably comprises a bridged crosslinked structure incorporated therein in an amount of 50 wt-% or more, more preferably 80 wt-% or more to make stable formation of micropores. The weight percent of the bridged crosslinked structure can be adjusted by the formulation of raw material during production.

Examples of the materials other than the bridged crosslinking agent in the organic-inorganic composite structure ($\alpha$) include metal-oxygen crosslinked structures such as titanium-oxygen crosslinked structure, zirconium-oxygen crosslinked structure and aluminum-oxygen crosslinked structure, and silicon-metal crosslinked structures and alkyl-substituted materials thereof such as monoalkyl-substituted material and dialkyl-substituted material.

2. Proton conducting structure ($\beta$)

2-1) Properties of proton conducting structure ($\beta$)

The proton conducting membrane of the present invention comprises a support filled with a proton conducting structure ($\beta$) comprising an acid-containing structure containing an acid group, which support being made of an organic-inorganic composite structure ($\alpha$) having a crosslinked structure formed by a metal-oxygen bond and an open-cell structure having internally-formed pores connected continuously to each other by the aforesaid crosslinked structure.

Herein, the proton conducting structure ($\beta$) is a material which takes major part in the protonic conduction from the anode to the cathode. As proton conducting materials there have been already known many materials, and for example, Nafion (trade name of Du Pont Inc.), Aciplex (trade name of Asahi Kasei Corporation) and Flemion (trade name of Asahi Kasei Corporation), which have sulfonic acid incorporated in fluororesin side chain, and those having sulfonic acid incorporated in aromatic polymer side chain. In the proton conducting membrane of the present invention, these known proton conducting materials may be incorporated in the organic-inorganic composite structure ($\alpha$), and in this case, too, many advantages such as capability of reinforcing the organic -inorganic composite structure ($\alpha$), capability of dispersing stress, durability to high temperature, high humidity, high concentration acid and oxidation, fuel barrier properties and affinity for electrolyte can be given.

On the other hand, the proton conducting structure ($\beta$) in the proton conducting membrane of the present

invention more preferably has a crosslinked structure. This crosslinked structure is an important constituent to the proton conducting membrane of the present invention and takes part in the mechanical strength, heat resistance, durability, dimensional stability, etc. of the membrane.

All the conventional fluororesin-based membranes and proton conducting membranes made of a polymer material having an aromatic molecular structure in its main chain are free of crosslinked structure. Therefore, these membranes show a great change of structure due to creep at high temperatures, resulting in the instabilization of the operation of the fuel cell at high temperatures.

For example, Nafion (trade name) membrane (Du Pont Inc.), which is a representative example of fluororesin-based membranes, is a membrane which stays strong and flexile when dried but drastically swells when wet. Thus, when the dimension of the membrane differs greatly from when dried to when wet, it not only makes it difficult to produce a membrane-electrode assembly (hereinafter occasionally referred to as "MEA") but also causes the membrane to always expand and contract with the change of temperature and humidity in the interior of the fuel cell due to the change of operating conditions also during the operation of the fuel cell, making it likely that the membrane can undergo break or the MEA can undergo destruction. Further, since the membrane becomes weak when wet, there is a danger that the membrane can break only due to the aforementioned dimensional change but also when there occurs some pressure difference in the fuel cell.

When Nafion membrane is given a temperature as high as about 150°C over an extended period of time while being wet, it becomes a jelly and destroyed itself and thus cannot be used a fuel cell membrane. Further, Nafion membrane undergoes degeneration to swollen state due to creep even at a temperature of about 120°C. Once degenerated, when Nafion membrane dries due to the change of the operating conditions of the fuel cell, it becomes a hard and brittle membrane that can break or crack or cause the destruction of the membrane-electrode assembly. This occurs similarly with a membrane having an aromatic molecular structure in its main chain. In this case, even when the electrolyte is retained by the organic-inorganic composite structure ($\alpha$), the effect of eliminating the degeneration of the electrolyte itself cannot be exerted, causing the electrolyte to be exfoliated or broken in the pores and hence making it likely that the protonic conductivity can be deteriorated or the fuel gas can leak.

However, the incorporation of the crosslinked structure makes it possible to solve these problems. In some detail, if the crosslinked structure is incorporated at a sufficient density, neither great dimensional change nor strength change can be seen regardless of whichever it is wet or dried.

In order to form such a crosslinked structure, an organic crosslinked material such as epoxy resin, crosslinkable acrylic resin, melamine resin and unsaturated polyester resin may be used, but in the case where it is exposed to high temperature and humidity under strongly acidic (protonated) conditions as in the fuel cell, prolonged stability can be difficultly obtained.

On the contrary, the crosslinked structure made of metal-oxygen bond such as silicon-oxygen bond, aluminum-oxygen bond, titanium-oxygen bond and zirconium-oxygen bond is relatively stable even in strongly acidic and high temperature and humidity atmosphere and thus can be preferably used as a crosslinked structure inside the fuel cell membrane. In particular, the silicon-oxygen bond is easily available and inexpensive and thus can be particularly preferably used.

As the crosslinked structure of the present invention there may be mainly used a silicon-oxygen bond, but metal-oxygen bonds other than the aforementioned silicon-oxygen bond or phosphorus-oxygen bond, boron-oxygen bond, etc. may be additionally used. In the case where "metal-oxygen bonds other than silicon-oxygen bond", "phosphorus-oxygen bond", "boron-oxygen bond", etc. are additionally used, the ratio of the silicon-oxygen bond in the crosslinked structure is not specifically limited, but the atomic ratio of "silicon" to "elements other than silicon connected to oxygen (metals other than silicon, phosphorus, boron, etc.)" is normally 50 mol-% or more, preferably 70 mol-% or more, more preferably 80 mol-% or more based on 100 mol-% of all the metal atoms.

When such an inorganic crosslink is introduced in an amount such that the structure is stabilized, the resulting compound is a hard and brittle material that can be difficultly handled as a single membrane. In this case, too, when the pores in the organic-inorganic composite structure ($\alpha$) are filled with the proton conducting structure ($\beta$), stress is dispersed due to the flexibility of the organic-inorganic composite structure ($\alpha$), making it possible to obtain a proton conducting membrane that can be easily handled.

2-2) Structure of proton conducting membrane ($\beta$)

In order that the proton conducting membrane might exhibit a high conductivity as well as good heat resistance, durability, dimensional stability and fuel barrier properties, it is preferred that the proton conducting membrane meet the following requirements.

1) To have a strong acid group present therein in a high concentration.
2) To have a proper crosslinked structure.

The proton conducting structure (β) is not specifically limited but preferably comprises an acid group-containing structure (A) having a structure represented by the following chemical formula (3), for example, which preferably has an acid group and is connected to the crosslinked structure of the membrane via Si-O bond in the light of the aforementioned conditions:

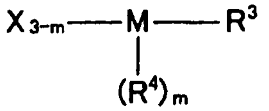

· · · (3)

wherein M represents a silicon atom; X represents -O-bond taking part in crosslinking or OH group; $R^3$ represents a molecular chain having at least one acid group; $R^4$ represents any of methyl, ethyl, propyl and phenyl groups; and m represents 0, 1 or 2.

Herein, $R^3$ is a group which has at least one acid group and is covalently connected to crosslinking group. As such an acid group there may be used any of various acids such as sulfonic acid, phosphonic acid, carboxylic acid, sulfuric acid, phosphoric acid and boric acid, but sulfonic acid, which has a low pKa value, can sufficiently assure the proton concentration in the membrane and is thermally stable, is particularly preferably used.

Further, the proton conducting membrane of the present invention comprises an organic-inorganic composite structure (α) filled with a proton conducting structure (β) comprising an acid-containing structure containing an acid group, and in some detail, it is a structure having the structures (α) and (β) penetrated by each other.

Since the proton conducting membrane for fuel cell is required to make effective conduction of proton and essentially depends on the concentration of proton in the membrane and the amount and movability of conduction medium (e.g., water), it is preferred that proton be present in the membrane in a high yield, and to this end, it is necessary that acid groups be disposed in the membrane in an amount as large as possible.

When such an acid group is extracted and diffused from the membrane with water supplied into the fuel cell or water or the like produced during the operation of the fuel cell, the concentration of proton in the membrane decreases, resulting in the drop of the protonic conductivity. Thus, it is preferred that the acid be fixed by covalent bonding so that it can be stably present in the membrane over an extended period of time rather than being retained in the membrane by ionic mutual interaction or the like.

Accordingly, the acid group-containing structure (A) to be contained in the proton conducting structure (β) preferably has a structure which has a sulfonic acid and is connected to a metal-oxygen crosslink and has a structure of the chemical formula (3) wherein $R^3$ has a structure represented by the following chemical formula (12):

$$-(CH_2)_n-SO_3H \qquad (12)$$

wherein n represents an integer of from 1 to 20.

Herein, the structure comprising a sulfonic acid and a crosslinked structure connected to each other is not specifically limited, but since this structure needs to be excellent in heat resistance, acid resistance, oxidation resistance, etc. because of the object of the present invention, methylene chain can be preferably used similarly to the organic group in the organic-inorganic composite structure (α).

Herein, it is preferred that the methylene chain be not branched and the sulfonic acid be present at the end of the polymethylene chain.

This is because when the methylene chain is branched, the methine structure in the branched portion is subject to oxidation or radical reaction, and as a result, the sulfonic acid is diffused from the membrane. Further, even if a sulfonic acid is present along the methylene chain rather than at the end of the methylene chain, the sulfonic acid-connected portion becomes a methine structure, causing the separation or diffusion of sulfonic acid as in the case where the methylene chain is branched.

Further, the acid group-containing structure (A) having sulfonic acid and crosslinked structure connected to each other is preferably free of aromatic ring. This is because the directly sulfonated aromatic compound can be easily synthesized but has a disadvantage that it can be easily separated, and when the fuel cell is subjected to operation under the high temperature and humidity conditions, which is an object of the present invention, desulfonation can easily occur, causing the deterioration of conductivity.

Further, a method which comprises preparing a sulfone group from an aromatic ring via several methylene chains by the addition of a compound such as 1,3-propanesulton rather than direct sulfonation is known (Ogata et al., "Polymer Preprint, Japan", 46 (1997), page 1,867), but the methylene adjacent to the aromatic ring becomes an active site called benzyl position, causing the separation of acid by decomposition or the like with the benzyl position as a starting point, and as result, it is much likely that the protonic conductivity can be drastically lowered, and this is not

suitable for the acid-connected structure in the present invention.

Accordingly, the acid group-connected structure in the acid group-containing structure (A) which is preferably used in the present invention is a structure represented by the aforementioned chemical formula (3) or (12).

Further, in the aforementioned chemical formula (12), n is preferably from 1 to 20, more preferably from 1 to 12.

Those having n of 0, i.e. , those having sulfon group directly connected to silicon atom are undesirable because they are subject to hydrolysis, and those having n or more than 20 are undesirable because the crosslink density of the membrane is deteriorated.

Among these compounds, 3-trihydroxysilylpropyl sulfonic acid, which is a starting material of the structure having n or 3, can be particularly preferably used because is commercially available from Gelest, Inc., and a synthesis method using allyl bromide as a starting material has been established.

Further, the number of functional groups taking part in the crosslinking of silicon atom in the acid group-containing structure (A) is preferably 2 or 3. The number of functional groups taking part in crosslinking may be 1, but in this case, the resulting structure blocks crosslinkage, causing undercrosslinking when a large amount of structure (A) is introduced to assure a sufficient amount of acid and hence making it impossible to form the desired membrane or causing the formation of a membrane having a low durability. Even if the number of functional groups taking part in crosslinking is 1, the structure (A) can be introduced so far as the physical properties of the membrane cannot be drastically affected. On the other hand, in the case where the number of functional groups taking part in crosslinking is 3, it is particularly desirable because a high crosslink density can be attained. Those having two functional groups taking part in the crosslinking of silicon atom have a straight-chain structure and thus are preferably used in combination with other crosslinkable structures or structure (A) having three functional groups taking part in crosslinking group. Herein, the acid group-containing structure (A) wherein the silicon atom has two functional groups taking part in crosslinking may have arbitrary substituents selected from those stable to high temperature, high humidity and strongly acidic conditions such as alkyl group provided therein besides bond to crosslinking group and bond having sulfonic acid group via methylene group, and among these alkyl groups, methyl group is preferably used because it is easily available.

Further, OH group which has not been reacted for connection to crosslinked structure may remain on the silicon atom in the acid group-containing structure (A).

Further, the proton conducting structure (β) may comprise a metal-oxygen bond structure (B) besides the acid group-containing structure (A). When the metal-oxygen bond structure (B) is separately incorporated besides the acid group-containing structure, the adjustment of the crosslink density, etc. can be made, making it possible to change the physical properties (e.g., flexibility, etc.) of the entire proton conducting structure (β).

Herein, the metal-oxygen bond structure (B) is not specifically limited so far as it forms a metal oxygen bond, but, by way of example, the structure represented by the following chemical formula (2) can be used.

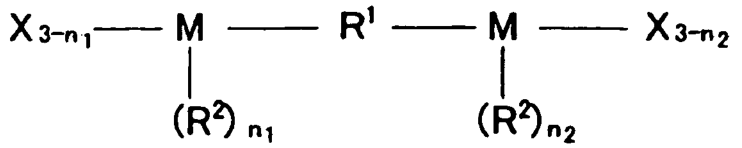

. . . (2)

wherein M represents a metallic atom; X represents -O-bond taking part in crosslinking or OH group; $R^1$ represents a $C_1$-$C_{50}$ carbon atom-containing molecular chain; $R^2$ represents any of methyl, ethyl, propyl and phenyl groups; and n1 and n2 each represent 0, 1 or 2.

The compound of the chemical formula (2) has the same structure as the bridged crosslinked structure (1) used in the organic-inorganic composite structure (α). When this compound is used, the adhesion between the organic-inorganic composite structure (α) and the proton conducting structure (β) is good because the organic-inorganic composite structure (α) and the proton conducting structure (β) have the same kind of material, and the proton conducting structure (β) can be provided with a proper flexibility.

$R^1$ in the compound of the chemical formula (2) is preferably a methylene chain under high temperature, strongly acidic and oxidative conditions as in the case of the organic-inorganic composite structure (α), and the length of methylene chain is preferably from 1 to 50, more preferably from 4 to 12 as in the aforementioned case.

In the case where the bridged crosslinked structure (2) is used in the proton conducting structure (β), there is no limitation to the number of terminal crosslinks as in the case of the organic-inorganic composite structure (α) and the number of terminal crosslinks may be freely selected depending on the desired physical properties.

Further, as the metal-oxygen bond structure (B) there may be used a compound represented by the following chemical formula (6) :

$$M(R^2)_m(X)_{4-m} \qquad (6)$$

wherein M represents a metallic atom; X represents -O-bond taking part in crosslinking or OH group; $R^2$ represents any of methyl, ethyl, propyl and phenyl groups; and m represents 0, 1 or 2.

Herein, as the metal M there may be preferably used aluminum, titanium, zirconium or silicon, and among these metals, silicon, which is inexpensive and can be easily adjusted for reaction and used in the form of many derivatives, can be particularly preferably used. The number of the crosslinking groups (4-m) may be an integer of from 1 to 4, but since the more the number of crosslinking groups is, the better are heat resistance, etc., the number of crosslinking groups is preferably 4 (i.e., m = 0). On the other hand, in the case where it is desired to provide the proton conducting structure (β) with flexibility, the number of substituents may be from 2 to 3 (i.e., m = 1 to 2). $R^2$ in the formula (6) may be any group having an arbitrary organic group, but, taking into account the high temperature stability and crosslink density, substituents such as methyl, ethyl, propyl and phenyl may be preferably used.

As the metal-oxygen bond structure (B) there may be used the aforementioned bridged crosslinked structure (2) and the structure represented by the chemical formula (6) in admixture, and the metal-oxygen bond structure (B) may comprise a plurality of bridged crosslinked structures (2) or a plurality of structures represented by the chemical formula (6).

The ratio of the acid group-containing structure (A) and the metal-oxygen bond structure (B) in the proton conducting structure (β) may be arbitrarily determined depending on the purpose, but when the ratio of the acid group-containing structure (A) is greater, the protonic conductivity is enhanced, while when the ratio of the metal-oxygen bond structure (B) is greater, the structural stability is enhanced. Accordingly, the ratio of (A) to (B) is properly determined depending on the working conditions and thus cannot be unequivocally predetermined, but the weight ratio of (B) in (β) is preferably from 0 to 95%. In the case where the proton conducting structure (β) is free of metal-oxygen bond structure (B), the protonic conductivity becomes maximum, but since the durability or physical properties are deteriorated, it is suitable for mild operating conditions of fuel cell, and in the case where the ratio of the metal-oxygen bond structure (B) is greater, the adjustment of durability or physical properties can be made, making it possible to obtain a proton conducting membrane which can withstand severer fuel cell operating conditions. However, when the weight ratio of the metal-oxygen bond structure (B) exceeds 95%, it is not desirable because the protonic conductivity is too low.

Further, the acid group-containing structure (A) and the metal-oxygen bond structure (B) in the proton conducting structure (β) may be each uniformly dispersed or may each form a localized phase structure. In the case of uniform dispersion, stability is good, and in the case of localization, conductivity is enhanced.

3. Method of producing proton conducting membrane

The method of producing the proton conducting membrane of the present invention is not specifically limited, but a method which comprises previously preparing an organic-inorganic composite structure (α), and then filling the organic-inorganic composite structure (α) with a starting material composition of proton conducting structure (β) may be preferably used.

3-1) Method of producing organic-inorganic composite structure (α)

The organic-inorganic composite structure (α) is produced by a method comprising a step of preparing a mixture containing an organic-inorganic composite crosslinkable compound (C) terminated by a crosslinkable silyl group and a carbon group covalently connected thereto, a step of forming the aforesaid mixture into a film and a step of subjecting the crosslinkable silyl group contained in the mixture thus film-formed to hydrolysis and/or condensation.

Herein, the organic-inorganic composite structure (C) is not specifically limited so far as it has a crosslinkable silyl group and a carbon group covalently connected thereto, but among these compounds, a bridged crosslinking agent represented by the following formula (4) which is a starting material of bridged crosslinked structure can be used in particular:

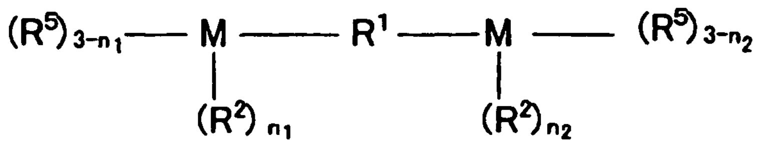

. . . (4)

wherein M represents a silicon atom; $R^5$ represents any of Cl, $OCH_3$, $OC_2H_5$, $OC_3H_7$, $OC_4H_9$, $OC_6H_5$, OH and $OCOCH_3$;

$R^1$ represents a $C_1$-$C_{50}$ carbon atom-containing molecular chain; $R^2$ represents any of methyl, ethyl, propyl and phenyl groups; and n1 and n2 each represent 0, 1 or 2, with the proviso that at least one of n1 and n2 is 1 or 2.

Herein, since the compound represented by the chemical formula (4) is a starting material of the bridged crosslinked structure of the chemical formula (1) described with reference to the organic-inorganic composite structure (α), the number of the hydrolyzable groups $R^5$, from which the group X taking part in crosslinking is derived, is preferably 2.9 to 3.5, more preferably close to 3.0 in terms of a in the numerical formula (II).

$$\sum_{i=1}^{P} m_i\{6-(n_1^i+n_2^i)\}=a$$

$$a:\ 2.9<a<3.5 \quad \ldots \ (II)$$

wherein P is the number of the kinds of the organic-inorganic composite crosslinkable compound (C) which is an integer of 1 or more; i represents an integer of from 1 to P; $n1^i$ and $n2^i$ represent n1 and n2 in the aforesaid formula (4) in the organic-inorganic composite crosslinkable compound (C) i, respectively, which each are 0, 1 or 2, with the proviso that at least one of $n1^i$ and $n2^i$ is 1 or 2; and $m_i$ represents a molar fraction.

Further, it is as mentioned above that at least one of n1 and n2 is preferably 1 or 2 and a plurality of bridging crosslinking agents corresponds to the chemical formula (4) having different numbers of hydrolyzable groups are preferably present in admixture.

Further, it is also as mentioned above that $R^1$ is preferably a carbon atom-containing molecular chain having from 1 to 50 carbon atoms, more preferably from 4 to 12 carbon atoms, or $R^1$ is preferably a hydrocarbon chain, and among these hydrocarbons, a straight molecular chain composed of polymethylene chain free of branched chain represented by the chemical formula (5) is preferably used.

$$-(CH_2)_m- \qquad (5)$$

wherein m represents an integer of from 1 to 20.

In this case, too, even $R^1$ having hetero atoms, aromatic rings and branched structures may be added so far as it doesn't impair the physical properties of the structure (α), but $R^1$ is preferably mainly composed of straight-chain methylene, more preferably entirely composed of straight-chain methylene.

As the bridging crosslinking agent represented by the aforementioned formula (4) there may be used one commercially available or one synthesized by the hydrosilylation reaction of hydrolyzable silyl group in a compound having corresponding unsaturated bond.

Referring to those commercially available, those wherein the polymethylene ($R^1$) is ethylene, hexamethylene, octamethylene or nonamethylene are commercially available from Gelest, Inc.

Further, referring to those which can be synthesized, starting materials wherein $R^1$ corresponds to tetramethylene, decamethylene or tetra decamethylene can be easily synthesized by subjecting 1,3-butadiene, 1,9-decadiene or 1,13-tetradecadiene to hydrosilylation reaction, and if the polymethylene chain has up to 20 carbon atoms, the crosslinking agent corresponds to the chemical formula (4) can be obtained by subjecting the corresponding diene compound to hydrosilylation reaction.

Specific examples of the compound include bis (diethoxymethylsilyl) ethane, bis(diethoxymethylsilyl) hexane, bis(diethoxymethylsilyl)octane, bis(diethoxy methylsilyl)nonane, bis(dimethylethoxysilyl)ethane, bis(dimethylethoxysilyl) hexane, bis(dimethylethoxy silyl)octane, etc., and these compounds may be used singly or in admixture.

Further, as previously mentioned, the organic-inorganic composite structure (α) is not limited to bridged type crosslinked structure but may be used in the form having various metal-oxygen bonds or having a metal-oxygen bond and containing an organic group, and by way of example, the organic-inorganic composite structure (α) may comprise hydrolyzable metal compounds such as titanium alkoxides, e.g., titanium tetrabutoxide and titanium tetrapropoxide, zirconium alkoxides, e.g., zirconium tetraisopropoxide and aluminum alkoxides, e.g., aluminum triisopropoxide or complexes thereof in admixture or may comprise tetraalkoxysilanes such as tetramethoxysilane and tetraethoxysilane, monoalkyl-substituted alkoxysilanes such as methyltriethoxysialne, ethyltrimethoxysilane and phenyltriethoxysilane, dialkyl-substituted alkoxysilanes such as dimethyldimethoxysilane and diethyltrimethoxysilane or oligomers thereof incorporated therein.

However, it is also as previously mentioned that the organic-inorganic composite structure (α) preferably comprises a bridged crosslinking agent (4) incorporated therein in an amount of 50 wt-% or more, more preferably 80 wt-% or more to make stable formation of micropores. The weight percentage of the bridged crosslinking agent (4) can be

adjusted by the formulation of starting material.

The organic-inorganic composite structure (α) of the present invention is produced by a method comprising a step of preparing a mixture containing an organic-inorganic composite crosslinkable compound (C) terminated by a crosslinkable silyl group and a carbon atom covalently connected thereto represented by, e.g., the chemical formula (4), but this mixing step may be an arbitrary method. This arbitrary method is a method involving the use of an ordinary agitating blade or agitating rod, a method involving the use of dissolver, an oscillating method, an ultrasonic method or the like but is not limited thereto and may be any method so far as uniform mixing can be made.

Further, the materials are preferably mixed with a proper solvent as necessary during mixing. As the solvent there may be used an alcohol such as methanol, ethanol, isopropanol and n-butanol or ether such as tetrahydrofurane and dioxane, but the solvent is not specifically limited so far as the mixture of starting materials used can be uniformly dissolved.

Further, the amount of the solvent is from 0.5 to 10 ml, preferably from 1 to 5 ml per g of the solid content in the organic-inorganic composite crosslinkable compound (C) to form an open-cell structure.

In some detail, when the amount of the solvent falls below the above defined range, an open-cell structure can be difficultly formed in the structure (α) thus obtained, and even if an open-cell structure is formed, the porosity is small, and on the contrary, when the amount of the solvent exceeds the above defined range, the structure (α) thus obtained can difficultly have an open-cell structure formed therein, and even if an open-cell structure is formed, the structure (α) cannot satisfy the strength required for support.

Further, other arbitrary components such as reinforcing material, flexibilizer, surfactant, dispersant, reaction accelerator, stabilizer, coloring agent, oxidation inhibitor and inorganic or organic filler may be incorporated so far as the object of the present invention is not impaired.

Subsequently, in order to produce the structure (α), the organic-inorganic composite crosslinkable compound (C) mixture solution obtained at the aforementioned step is formed into film by a known method such as casting method and coating method.

The film-forming method is not specifically limited and may be an arbitrary method so far as a uniform membrane can be obtained.

Further, the thickness of the film thus formed is properly determined by the protonic conductivity, fuel permeability and mechanical strength of the resulting proton conducting membrane and thus cannot be unequivocally defined but is normally from 10 m to 1 mm, particularly preferably from 30 to 300 μm as calculated in terms of dried thickness.

Subsequently, by subjecting the crosslinkable silyl group contained in the organic-inorganic composite crosslinkable compound (C) thus film-formed to so-called sol-gel reaction, more particularly subjecting the hydrolyzable silyl group in the compound (C) to hydrolysis and condensation or only condensation if the crosslinkable silyl group is a silanol group or silanolate group, a crosslinked structure made of silicon-oxygen bond is formed to obtain a support (α) which is an organic-inorganic composite. In this case, even if an alkoxide of titanium, zirconium, aluminum or the like is added, hydrolysis or condensation can be conducted by the same reaction.

Herein, the open-cell structure having the aforementioned pore diameter and porosity to be formed in the organic-inorganic composite structure (α) is formed by making the use of phase separation from the aforementioned solvent accompanying the increase of the molecular weight of the support by the aforementioned condensation reaction. Accordingly, the formation of the three-dimensional network structure is greatly affected by the percent hydrolysis and concentration reaction rate, and it is necessary that the temperature and catalyst concentration be properly adjusted.

In the aforementioned reaction step, the temperature during the formation of the open-cell structure by phase separation after casting is predetermined to be from 5°C to boiling point of solvent, preferably from 10 to 40°C. Subsequently, in order to fixing crosslinking, the material can be cured at a temperature of from boiling point of solvent to 300°C, preferably from 100 to 200°C to obtain a support (α) having a three-dimensional network structure.

In the case where the proton conducting membrane of the present invention thus obtained is used at a temperature as high as 100°C or more, it is preferred that the proton conducting membrane be heated to a temperature of not lower than the working temperature to undergo crosslinking. Referring to such heating, the crosslinking step may be effected at a temperature of from 100 to 300°C or the crosslinking reaction may be effected such that sol-gel curing occurs at a temperature of from 5 to 40°C in 2 hours or more, followed by culturing at a temperature of from 100 to 300°C, preferably from 100 to 200°C, making it possible to fix the crosslinked structure. When the temperature is too low, the crosslinking reaction slows down, and when the temperature is too high, the organic moiety can be deteriorated and it is preferred that heating be effected within the aforementioned temperature range.

Referring to the heating method, known methods such as heating by oven, heating under pressure by autoclave, far infrared ray heating, electromagnetically induced heating and microwave heating may be used singly or in combination.

Further, in order to efficiently effect hydrolysis or condensation reaction, the crosslinking reaction may be effected with the mixture solution previously having water incorporated therein or under heating in water vapor.

Further, in order to accelerate the hydrolysis/ condensation reaction of the crosslinkable silyl group contained in the organic-inorganic composite crosslinkable compound (C), it is preferred that a Brønsted acid such as hydrochloric

acid, sulfuric acid and phosphoric acid be previously added to the reaction system. Further, since the formation of the crosslinked structure can be accelerated also by a base, a base catalyst such as ammonia and sodium hydroxide may be used, but a Brønsted acid catalyst is preferably used to form a crosslinked structure support (α) having a three-dimensional network structure.

In the case where the aforementioned Brønsted acid catalyst is used in the form of aqueous solution, the concentration of the aqueous solution is preferably not lower than 5 N to less than 10 N. When the concentration of the aqueous solution falls below this range, the reaction slows down, making it difficult to obtain the desired network structure, and on the contrary, when the concentration of the aqueous solution is not lower than this range, the reaction occurs too rapidly to form the desired network structure to disadvantage.

Further, the added amount of such a Brønsted acid catalyst is preferably such that the relationship represented by the following numerical formula is satisfied.

$$0.5 \leq \frac{z(\sigma c - Nc \times Mc)}{Ms \times 2(3-n)x} \leq 1.5$$

(Numerical formula III)

wherein the added amount of (4) is x (mol); the number of mols of $R^5$ is 2(3-n) x (mol); the added amount of catalyst is z (1); the specific gravity of catalyst is σc; the concentration of catalyst is Nc (normal); the molecular weight of catalyst is Mc; and the molecular weight of water is Ms.

When the added amount of the Brønsted acid catalyst falls below the value satisfying the aforementioned numerical formula (III), the percent hydrolysis is too small, causing the drop of crosslink density, and when the added amount of the Brønsted acid catalyst is greater than this value, the added amount of water increases, making it impossible to form a three-dimensional network structure.

Herein, in the aforementioned numerical formula (III), the numerical values 0.5 and 1.5 each represent the equivalent of water in the aqueous solution of Brønsted acid catalyst to the crosslinkable silyl group, and the numerical value of 1.0 means that water is added in an amount equal to that in the case where all the crosslinking groups are hydrolyzed.

Further, in the aforesaid step of adding a Brønsted acid to accelerate the reaction, when the temperature is too high, the reaction proceeds too much to handle, and the step is preferably effected at a temperature of not lower than the solidification point of the solvent to lower than the boiling point of the solvent, preferably from 0 to about 40°C.

The organic-inorganic composite structure (α) membrane thus obtained as a support may be rinsed with metal ion-free water such as distilled water and ion-exchanged water as necessary.

Further, the organic-inorganic composite structure (α) membrane thus obtained may be irradiated with ultraviolet rays or electron rays to complete crosslinking.

Further, the organic-inorganic composite structure (α) to be used herein originally exhibits a good adhesion to the proton conducting structure (β) but can be subjected to surface treatment such as plasma treatment and corona treatment to further enhance its adhesion.

3-2) Method (1) of compositing with proton conducting structure

The proton conducting membrane of the present invention is produced by filling the micropores in the organic-inorganic composite structure (α) with the proton conducting structure (β).

The proton conducting structure (β), if an existing non-crosslinked electrolyte resin (e.g., fluororesin having sulfonic acid incorporated in its side chain) or the like is used, can be easily produced by filling the organic-inorganic composite structure (α) with the resin dissolved in a solvent or the like, and then removing the solvent by heating, pressure reduction or like means.

However, since the proton conducting membrane of the present invention is intended to be used as a proton conducting membrane for high temperature-operating fuel cells and direct fuel (methanol) type fuel cells, a proton conducting structure (β) which stays stable at higher temperatures and undergoes little swelling of membrane with solvent is preferably used, and to this end, a crosslinked structure is preferably introduced. The proton conducting membrane having a crosslinked structure can difficultly fill the organic-inorganic composite structure (α) while being crosslinked. This is because when crosslinked, the proton conducting structure (β) becomes stabilized and thus is insoluble and infusible in the solvent and has no degree of freedom of filling the pores.

Accordingly, in the case where the pores in the organic-inorganic composite structure (α) are filled with the

proton conducting structure (β) having a crosslinked structure, it is preferred that a starting material of precursor of the proton conducting structure having a crosslinking reactivity fill the structure (α), followed by the crosslinking reaction.

In other words, the method of producing the proton conducting membrane of the present invention is preferably a method comprising a step of filling the aforesaid organic-inorganic composite structure (α) with a mixture comprising an acid group-containing compound (D) containing at least a crosslinkable silyl group and an acid group and then subjecting the crosslinkable silyl group contained in the mixture which has thus filled the structure (α) to hydrolysis and/or condensation to form a crosslinked structure of proton conducting structure (β) inside the organic-inorganic composite structure (α).

Herein, the acid group-containing compound (D) is not specifically limited so far as it has a crosslinkable silyl group and contains an acid group, but a compound represented by the following formula (7) for example is exemplified.

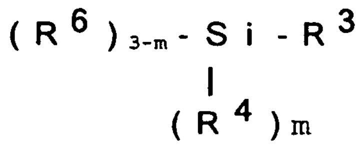

(7)

wherein $R^6$ represents any of OH, $OCH_3$, $OC_2H_5$ and $OC_3H_7$; $R^3$ represents a molecular chain having at least one acid group; $R^4$ represents any of methyl, ethyl, propyl and phenyl groups; and m represents 0, 1 or 2.

This is a compound which is a starting material of the acid group-containing structure (A) represented by the chemical formula (3) .

Accordingly, as the acid group possessed by $R^3$ there may be used the same acid group as in the aforementioned formula (3), preferably sulfonic acid, which is also thermally stable.

Further, the compound corresponding to the chemical formula (7) may be in the form of oligomer which has been previously condensed. The oligomer, if used, may be a single oligomer of the compound (7) or an oligomer mixed with other crosslinking agents.

For example, it is also effective that the aforesaid acid group-containing compound (D) comprises one having the structure represented by the following formula (8):

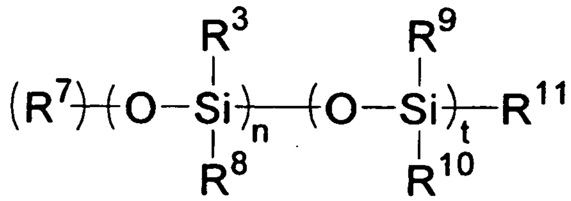

(8)

wherein $R^3$ represents a molecular chain having at least one acid group; $R^7$ represents a group selected from the group consisting of H, $CH_3$, $C_2H_5$, $C_3H_7$, $C_4H_9$ and $C_6H_5$ which may have a branched structure that partly constitutes -Si bond or an intramolecular annular structure; $R^8$, $R^9$, $R^{10}$ and $R^{11}$ each represent a group selected from the group consisting of $R^3$, OH, $OCH_3$, $OC_2H_5$, $OC_3H_7$, $OC_4H_9$, $OC_6H_5$, $CH_3$, $C_3H_7$, $C_4H_9$ and $C_6H_5$ that partly constitutes -OSi bond or an intramolecular annular structure; n represents an integer of from 1 to 50; t represents an integer of from 0 to 50, with the proviso that the sum of n and t is not greater than 100; and the compound may be a combination of compounds wherein n and t are the same or different.

Thus, when a previously polymerized or condensed oligomer is used, sequential polymerization or condensation occurs without causing reaction at a time, making it possible to eliminate shrinkage during condensation. Accordingly, the filling of the proton conducting structure (β) into the organic-inorganic composite structure (α) can be conducted more easily, allowing stable production.

Further, in the case where the structure of the acid -containing compound (D) has a structure represented by the aforementioned formula (7) or (8), $R^3$ preferably has a structure represented by the following formula (12). This is a starting material of the structure of the aforementioned chemical formula (3).

$$-(CH_2)_n\text{ -}SO_3H \qquad (12)$$

wherein n represents an integer of from 1 to 20.

Trihydroxysilylpropylsulfonic acid as an acid-containing compound (D) which is a starting material of the structure of the aforementioned formula (12) wherein n is 3 can be particularly preferably used because it is commercially available from Gelest, Inc. and thus is easily available, and besides this compound, compounds disclosed in JP-A-54-138522 (US Patent 4, 152, 165) can be preferably used as acid-containing compound (D).

Further, in the case where as a starting material of the proton conducting structure (β) there is separately used a crosslinking agent besides the acid group-containing compound (D), a crosslinking agent represented by the following formula (4) for example can be used.

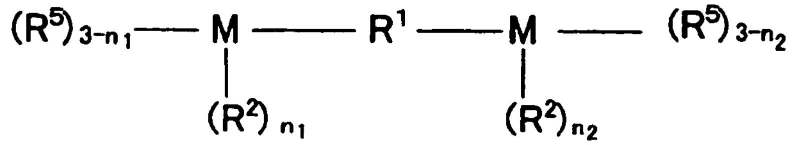

· · · (4)

wherein M represents a silicon atom; $R^1$, $R^2$ and $R^5$ each are the same compound as used as organic-inorganic composite crosslinkable compound (C) in the production of the aforementioned organic-inorganic composite structure (α); and n1 and n2 each represent 0, 1 or 2.

The compound of this chemical formula (4) is a starting material of the compound represented by the chemical formula (2), and as this starting material there may be used the same bridged crosslinking agent as used in the organic-inorganic composite structure (α) . Further, one or more of the compounds represented by the aforementioned chemical formula (4) may be used in admixture.

Further, in the case where as a starting material of the proton conducting structure (β) there is separately used a crosslinking agent besides the acid group-containing compound (D), a crosslinking agent represented by the following chemical formula (16) for example can be used.

$$M\ (R^2)_m\ (R^5)_{4-m} \qquad (16)$$

wherein M represents a metallic atom; $R^5$ represents any of OH, $OCH_3$, $OC_2H_5$, $OC_3H_7$, $OC_4H_9$, $OC_6H_5$, Cl and $OCOCH_3$; $R^2$ represents any of methyl, ethyl, propyl and phenyl groups; and m represents 0, 1 or 2.

This is a starting material of the crosslinked structure of the chemical formula (6), and similarly to the aforementioned metal-oxygen bond structure (B), as the metal there may be used titanium, aluminum, zirconium or the like, and in some detail, hydrolyzable metal compounds such as titanium alkoxides, e.g., titanium tetrabutoxide and titanium tetrapropoxide, zirconium alkoxides, e.g., zirconium tetraisopropoxide and aluminum alkoxides, e.g., aluminum triisopropoxide or complexes thereof may be used.

Further, it is as mentioned as in the aforementioned structure that M is preferably silicon from the standpoint of cost and reaction control, and specific examples of the crosslinking agent include tetraalkoxysilanes such as tetramethoxysilane and tetraethoxysilane, monoalkyl-substituted alkoxysilanes such as methyltriethoxysialne, ethyltrimethoxysilane and phenyltriethoxysilane, dialkyl-substituted alkoxysilanes such as dimethyldimethoxysilane and diethyltrimethoxysilane, oligomers thereof, etc.

The ratio of the acid group-containing structure (A) to the metal-oxygen bond structure (B) in the proton conducting structure (β) cannot be unequivocally predetermined as previously mentioned, but since the weight proportion in the structure (β) is preferably from 0 to 95%, it is preferred that the ratio of the acid group-containing compound (D) to the crosslinking agent which are starting materials be almost similarly from 0 to 95%, though being affected by the molecular weight of the hydrolyzable groups.

The method of producing the proton conducting membrane of the present invention comprises a step of preparing a mixture of the acid group-containing compound (D) and the crosslinking agent which is an arbitrary component, and as this mixing step there may be used an arbitrary method. This arbitrary method is a method involving the use of an ordinary agitating blade or agitating rod, a method involving the use of dissolver, an oscillating method, an ultrasonic method or the like but is not limited thereto and may be any method so far as uniform mixing can be made.

Further, the materials are preferably mixed with a proper solvent as necessary during mixing. As the solvent there may be used an alcohol such as methanol, ethanol, isopropanol and n-butanol or ether such as tetrahydrofurane and dioxane, but the solvent is not specifically limited so far as the mixture of starting materials used can be uniformly dissolved.

Further, other arbitrary components such as reinforcing material, flexibilizer, surfactant, dispersant, reaction accelerator, stabilizer, coloring agent, oxidation inhibitor and inorganic or organic filler may be incorporated so far as the object of the present invention is not impaired.

Further, Referring to the method of filling the micropores in the organic-inorganic composite structure (α) with the mixture thus obtained, an arbitrary method can be employed, and any method may be employed without any special limitation so far as the structure (α) can be filled with the mixture. As this method there may be used a method which comprises casting the mixture over the structure (α) or dipping the structure (α) in the mixture or other methods. Alternatively, the filling may be conducted under reduced pressure or heating. The filling may be conducted in such a manner that the mixture is received in the interior of the structure (α) or the mixture is spread over the structure (α) to a thickness of somewhat greater than the thickness of the structure (α) to form a layer of the proton conducting structure (β) on the surface thereof.

Further, the method of producing the proton conducting membrane of the present invention comprises a step of filling the micropores in the organic-inorganic composite structure (α) with the acid group-containing compound (D) and the crosslinking agent which is an arbitrary component and then subjecting the acid group-containing compound (D) and the crosslinking agent which is an arbitrary component to crosslinking.

In the case where crosslinking is conducted, a catalyst may be used, and as the catalyst there may be used a known catalyst such as Brønsted acid, e.g., hydrochloric acid, sulfuric acid, phosphoric acid and acetic acid, inorganic base, e.g., sodium hydroxide and ammonia and organic base, e.g., triethylamine and diethylamine. Any of these catalysts may be used in the method of producing the proton conducting membrane of the present invention. Further, the catalyst concentration may be arbitrarily determined taking into account pot life, processability, etc. Further, the catalyst may be previously contained in the mixture containing the acid group-containing compound (D) or the structure thus filled may be exposed to a vapor containing a catalyst. Alternatively, a fluoride such as potassium fluoride and ammonium fluoride may be additionally used.

Further, water to be used in hydrolysis may be used during hydrolysis. Water, too, may be previously contained in the mixture containing the acid group-containing compound (D), or the structure thus filled may be exposed to water vapor.

In the aforementioned crosslinking reaction step, heating may be effected and normally, if a solvent is used, may be made to a temperature of not lower than the boiling point of the solvent or, if no solvent is used, may be made to a temperature of from not lower than room temperature to not higher than 300°C, preferably from 100 to 250°C. In particular, in the case where the proton conducting membrane of the present invention is used at a temperature as high as not lower than 100°C, it is preferred that heating be conducted at a temperature of not lower than the working temperature to cause crosslinking. The heating time is not specifically limited but is preferably from about 5 minutes to 1 week.

Referring to the heating method, known methods such as heating by oven, heating under pressure by autoclave, far infrared ray heating, electromagnetically induced heating and microwave heating may be used singly or in combination.

The membrane obtained by the producing method of the present invention may be rinsed or subjected to acid treatment for protonation as necessary.

3-3) Method (2) of compositing with proton conducting structure

The proton conducting membrane of the present invention is produced by filling the micropores in the organic-inorganic composite structure (α) with the proton conducting structure (β).

As the starting material of the structure (β) there may be used an acid group-containing compound (D) containing an acid and containing a crosslinking group as previously mentioned, but an acid group precursor-containing compound (E) having a group capable of being converted to an acid by hydrolysis, oxidation or the like after crosslinking may be used instead of the acid group-containing compound.

Herein, the group capable of being converted to an acid group indicates an acid ester, acid base or a mercapto group, sulfide group or the like which can be converted to sulfonic acid by oxidation.

In other words, the method of producing the proton conducting membrane of the present invention comprises a step of filling the aforesaid organic-inorganic composite structure (α) with a mixture comprising an acid group precursor-containing compound (E) containing at least a crosslinkable silyl group and an acid precursor group capable of being converted to an acid group and then subjecting the crosslinkable silyl group contained in the mixture which has thus filled the structure (α) to hydrolysis and/or condensation to form a crosslinked structure and a step of subjecting the acid group precursor in the acid group precursor-containing compound (E) to oxidation and/or hydrolysis to produce an acid group, thereby forming a proton conducting structure (β) having an acid group inside the organic-inorganic composite structure (α)

Herein, the acid group precursor-containing compound (E) is not specifically limited so far as it contains a crosslinkable silyl group and an acid group precursor, but a compound represented by the following formula (7) for example may be exemplified.

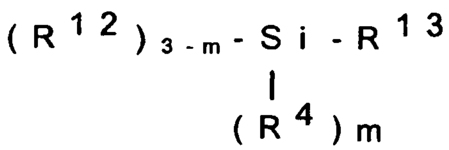

(17)

wherein $R^{12}$ represents any of OH, $OCH_3$, $OC_2H_5$ and $OC_3H_7$; $R^{13}$ represents a molecular chain having at least one acid group precursor; $R^4$ represents any of methyl, ethyl, propyl and phenyl groups; and m represents 0, 1 or 2.

This is a compound which is a starting material of the acid group-containing structure (A) represented by the chemical formula (3).

Accordingly, as the acid precursor group possessed by $R^3$ there may be used a phosphonic acid ester, phosphonic acid salt, carboxylic acid ester, carboxylic acid salt, sulfonic acid ester, sulfonic acid salt, sulfide group, mercapto group or the like, and in particular, sulfonic acid ester, sulfonic acid salt, sulfide and mercapto group are preferably used.

Further, among these acid precursor groups, mercapto group is particularly preferably used because it can be easily oxidized.

Further, the compound corresponding to the chemical formula (7) may be in the form of oligomer which has been previously condensed. It is as mentioned in the acid group-containing compound (D) that the oligomer may be a single oligomer of the compound (7) or an oligomer mixed with other crosslinking agents.

For example, it is also effective that the aforementioned acid group precursor-containing compound (E) comprises a structure represented by the following formula (13):

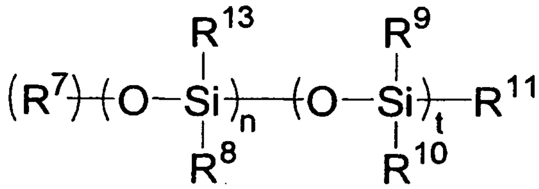

(13)

wherein $R^{13}$ represents a molecular chain having at least one acid group precursor; $R^7$ represents a group selected from the group consisting of H, $CH_3$, $C_2H_5$, $C_3H_7$, $C_4H_9$ and $C_6H_5$ which may have a branched structure that partly constitutes -Si bond or an intramolecular annular structure; $R^8$, $R^9$, $R^{10}$ and $R^{11}$ each represent a group selected from the group consisting of $R^3$, OH, $OCH_3$, $OC_2H_5$, $OC_3H_7$, $OC_4H_9$, $OC_6H_5$, $CH_3$, $C_2H_5$, $C_3H_7$, $C_4H_9$ and $C_6H_5$ that partly constitutes -OSi bond or an intramolecular annular structure; n represents an integer of from 1 to 50; t represents an integer of from 0 to 50, with the proviso that the sum of n and t is not greater than 100; and the compound may be a combination of compounds wherein n and t are the same or different. In this case, too, this means that the compound may be in the form of random copolymer-like or block copolymer-like structure as expressed in terms of polymer.

Thus, when a previously polymerized or condensed oligomer is used, sequential polymerization or condensation occurs without causing reaction at a time, making it possible to eliminate shrinkage during condensation. Accordingly, the filling of the proton conducting structure (β) into the organic-inorganic composite structure (α) can be conducted more easily, allowing stable production.

Further, the structure of the acid precursor-containing compound (E) is preferably a structure of the aforementioned formula (17) wherein $R^3$ is represented by the following formula (15):

$$-(CH_2)_n-SH \qquad (15)$$

wherein n represents an integer of from 1 to 20.

The group via which the silicon atom and the acid precursor group are connected to each other is preferably a methylene chain, which is expected to be stable, as previously mentioned, and it is also as mentioned in the acid group-containing compound (D) that the length of carbon chain is preferably from 1 to 20 taking into account stability.

Further, as the acid precursor group there is preferably used a mercapto group, which can be easily converted to sulfonic acid by oxidation.

Specific examples of such an acid precursor group-containing compound (E) include 3-mercaptopropyl trimethoxysilane, 3-mercaptopropyltriethoxysilane, 3-mercaptopropyltripropoxysilane, 3-mercaptopropyl tributoxysilane, 2-mercaptoethyltrimethoxysilane, 2-mercaptoethyltriethoxysilane, 2-mercaptoethyl tripropoxysilane, 2-mercaptoethyltributoxysilane, mercaptomethyltrimethoxysilane, 3-mercaptopropyl methyldimethoxysilane, 3-mercaptopropylmethyl diethoxysilane, 3-mercaptopropylmethyldipropoxysilane, 3-mercaptopropylmethyldibutoxysilane, 3-mercapto propylethyldimethoxysilane, 3-mercaptopropylbutyl diethoxysilane, 3-mercaptopropylphenyldimethoxysilane, mercaptomethylmethyldiethoxysilane, etc., but the present invention is not limited thereto. Among these compounds, 3-mercaptopropyltrimethoxysilane is inexpensive and easily available and thus can be preferably used. Further, an oligomer containing the structure of the chemical formula (11) may be used as a starting material, and specific examples of the oligomer include X-41-1805 (product number) (produced by Shin-Etsu Chemical Co., Ltd.), which is a copolymer of 3-mercaptopropyltrimethoxysilane with tetraethoxy silane, X-41-1810 (product number) (produced by Shin-Etsu Chemical Co., Ltd.), which is a copolymer of 3-mercaptopropyltrimethoxysilane with methyltriethoxy silane, SMS-992 (product number) (produced by Gelest, Inc.), which is a homopolymer of 3-mercaptopropylmethyl dimethoxysilane, SMS-022 and SMS-042 (product number) (produced by Gelest, Inc.), which each are a copolymer of 3-mercaptopropylmethyldimethoxysilane with dimethoxydimethylsilane, etc., and they are preferably used. Further, besides these commercially available products, oligomers can be obtained by a known method as disclosed in JP-A-9-40911, JP-A-8-134219, JP-A-2002-3C149, "Journal of Polymer Science: Part A: Polymer Chemistry", vol. 33, pp. 751 - 754, 1995, "Journal of Polymer Science: Part A: Polymer Chemistry", vol. 37, pp. 1017 - 1026, 1999, etc.

Further, it is also as mentioned in the acid group-containing compound (D) that in the case where as the starting material of the proton conducting membrane (β) there is separately used a crosslinking agent besides the acid precursor group-containing compound (E), a crosslinking agent represented by the following formula (4) or (16) may be used.

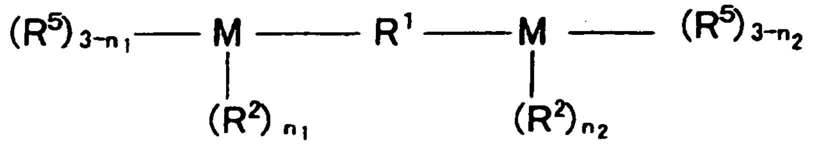

· · · (4)

wherein M represents a silicon atom; $R^5$ represents any of Cl, $OCH_3$, $OC_2H_5$, $OC_3H_7$, $OC_4H_9$, $OC_6H_5$, OH and $OCOCH_3$; $R^1$ represents a $C_1$-$C_{50}$ carbon atom-containing molecular chain; $R^2$ represents any of methyl, ethyl, propyl and phenyl groups; and n1 and n2 each represent 0, 1 or 2, with the proviso that at least one of n1 and n2 is 1 or 2.

$$M\ (R^2)_m(R^6)_{4-m} \qquad (14)$$

wherein M represents a metallic atom; $R^5$ represents any of OH, $OCH_3$, $OC_2H_5$, $OC_3H_7$, $OC_4H_9$, $OC_6H_5$, Cl and $OCOCH_3$; $R^2$ represents any of methyl, ethyl, propyl and phenyl groups; and m represents 0, 1 or 2.

The chemical formula (4) and the chemical formula (14) are the same as used in the acid group-containing compound (D), and the contents thereof are as previously mentioned.

It is also as mentioned above chat the mixing method is effected as mentioned above, a solvent is used as necessary and other arbitrary components such as reinforcing material, flexibilizer, surfactant, dispersant, reaction accelerator, stabilizer, coloring agent, oxidation inhibitor and inorganic or organic filler can be added as necessary.

Further, filling method, catalyst in crosslinking, addition of water, heating conditions, etc., too, are as mentioned above.

In the method of producing the proton conducting membrane of the present invention, if the acid precursor group-containing compound (E) is used, a reaction of converting the acid precursor group to an acid group is needed. For example, in the case where as the acid precursor group there is used an acid ester or acid base, it may be reacted with a Brønsted acid such as hydrochloric acid, sulfuric acid and nitric acid to undergo ester hydrolysis or ion exchange by which an acid group is produced.

On the other hand, if a sulfide group or mercapto group is used, a sulfonic acid group can be obtained by oxidation. As an oxidizing method there may be used an ordinary oxidizing agent. In some detail, an oxidizing agent such as nitric acid, hydrogen peroxide, oxygen, organic peroxide (percarboxylic acid), aqueous bromine, hypochlorite, hypobromite, potassium permanganate and chromic acid may be used.

Referring to the oxidation reaction of mercapto group, etc. with these oxidizing reagents, a known method disclosed in "Jikken Kagaku Koza (Institute of Experimental Chemistry)", 3rd edition, Maruzen, page 1,775 and references cited therein, and organic peracids such as peracetic acid and perbenzoic acid are particularly preferably used because they can be relatively easily handled and give a good yield in oxidation.

In order to protonate the sulfonic acid group in the membrane obtained by oxidation, the membrane may be brought into contact with a strong acid such as hydrochloric acid and sulfuric acid, and in this case, the protonating conditions such as acid concentration, dipping time and dipping temperature are properly determined by the concentration of sulfonic acid group in the membrane, the porosity of the membrane, the affinity of the membrane for acid, etc.

Representative examples of this method include a method which comprises dipping the membrane in a 1 N sulfuric acid at 50°C for 1 hour, etc.

The proton conducting membrane of the present invention thus obtained is flexible, has been highly filled with a proton conducting composition and has a structure comprising the proton conducting composition continuously connected to each other in the direction along the thickness of the membrane and thus exhibits an excellent protonic conductivity.

4. Fuel cell

The proton conducting membrane thus obtained is an organic-inorganic composite membrane excellent in heat resistance and durability which exhibits an excellent protonic conductivity even at high temperatures and thus can be preferably used as a proton conducting membrane for fuel cell. In order to produce a fuel cell from the conductive membrane of the present invention, a so-called membrane-electrode assembly having the aforesaid membrane and an electrode carrying a catalyst is produced.

This membrane-electrode assembly can be produced by properly using a known method such as hot pressing method and method which comprises spreading a proton conducting composition over a membrane and/or electrode.

Further, the proton conducting membrane of the present invention can be used not only as electrolyte membrane for polymer electrolyte fuel cell but also as chemical sensor, ion exchange membrane, etc.

<Example>

The present invention will be further described hereinafter in the following examples and comparative examples, but the present invention is not limited thereto. The compounds, solvents, etc. used in the examples and comparative examples were all commercially available products.

[Evaluating method]

(1) Evaluation of physical properties of proton conducting membrane

The measurement of the flexing resistance of the proton conducting membrane was executed according to flexing resistance test method (cylindrical mandrel method as described in JIS K 5600-5-1. Using a Type I mandrel (diameter: 10 mm), the measurements were evaluated according to the following criterion.

O ... No cracks observed

× ... Some cracks observed

(2) Evaluation of protonic conductivity of proton conducting membrane

A proton conducting membrane of the present invention was coated with a carbon paste (Conducting Graphite Paint; LADO RESEARCH INDUSTRIES, INC) on the both surfaces thereof, and then bonded to a platinum plate. Using a Type 1260 electrochemical impedance measuring device (produced by Solatron Inc.), impedance was measured at a frequency of from 0.1 Hz to 100 kHz through these platinum plates to evaluate the protonic conductivity of the ionically-conductive membrane.

In the aforementioned measurement, protonic conductivity was measured on a sample supported in an electrically-insulated sealed container in a water vapor atmosphere (95 to 100%RH) at each of cell temperatures which are varying from room temperature to 160°C by a temperature controller. As representative values, those measured at 60°C and 140°C were presented. In the measurement at 100°C or more, measurement was conducted under pressure in the measuring tank.

(3) Evaluation of heat resistance of proton conducting membrane

The proton conducting membrane was heated in an unsaturated water vapor in a 140°C autoclave for 5 hours. The proton conducting membrane thus heated was then subjected to visual evaluation, dimensional measurement and flexing resistance test, and the criterion for evaluation is as follows.

Visual:

O ... No change from before test
× ... Fading/deformation occurs

Dimensional change: Percent change (%)
Flexing resistance: Same as in (1)

(4) Synthesis of precursor

(Synthesis of bifunctional precursor)

A toluene solution of 11.0 g of 1,7-octadiene (produced by Wako Pure Chemical Industries, Ltd.) and 26.9 g of diethoxymethylsilane (produced by Shin-Etsu Silicone Co., Ltd.) was mixed with 0.05 mmol of a solution of Karstedt catalyst (U.S. Pat. 3, 775, 452) prepared from chloroplatinic acid (produced by Wako Pure Chemical Industries, Ltd. and divinyl tetramethyl disiloxane (produced by Gelest, Inc.) and then stirred at 30°C in a nitrogen atmosphere overnight. The reaction mixture thus obtained was then purified by distillation to obtain 1,8-bis(diethoxymethylsilyl)octane. The structure was identified by NMR.

(Synthesis of trifunctional precursor)

1,8-Bis(dimethylethoxysilyl)octane was obtained in the same manner as mentioned above except that dimethyl ethoxysilane was used instead of diethoxymethylsilane.

(5) Evaluation of electricity generation of fuel cell

The membrane thus obtained was used to prepare a single fuel cell unit. The membrane was provided interposed between gas diffusion electrodes (2.0 mg platinum-loaded product, produced by E-TEK), and the combination was then incorporated in a single cell (membrane area: 5.25 $cm^2$) produced by Electrochem Inc. to prepare a single fuel cell unit. The fuel cell thus obtained was then measured for voltage-current curve with hydrogen and oxygen being introduced thereinto on the anode and cathode thereof, respectively, and an electronic load being connected to the output thereof.

[Example 1]

0.6 g of 1,8-bis(diethoxymethylsilyl)octane and 0.5 g of 1,8-bis(dimethylethoxysilyl)octane were dissolved in 1 ml of isopropanol. 0.22 g of a 7 N hydrochloric acid was added to 1 ml of isopropanol. The two solutions were stirred in combination for scores of seconds, and then poured in a polystyrene disc having an inner diameter of 8.4 cm (produced by YAMAMOTO MFG. CO., LTD.) where it was then cultured at room temperature (20°C) for 60 hours to obtain a white rubbery support. The support was measured for porosity and pore diameter by a porosimeter and for inner structure by SEM, and it was confirmed that an open-cell structure having a porosity of 70 vol-% and an average pore diameter of 500 nm had been formed. In the structure thus obtained, the ratio of metal atom to carbon atom is about 1 : 5. Further, the numerical value a in the formula (II) is about 3.0.

Subsequently, a solution obtained by dissolving 0.7 g of trihydroxysilylpropylsulfonic acid (produced by Gelest, Inc.) and 0.015 g of 1,8-bis(dimethylethoxy silyl)octane in 0.63 ml of isopropanol and a solution obtained by adding 0.14 g of a 10 N hydrochloric acid to 0.63 ml of isopropanol were stirred in combination for several minutes, poured onto a support prepared in a disc where the mixture was then heated to room temperature (20°C) for 60 hours and 80°C in an unsaturated water vapor for 24 hours and in a 150°C oven for 6 hours to obtain a white flexible membrane.

Before being measured for the aforementioned properties, the membrane thus obtained was rinsed with 80°C flowing water for 2 hours. The inner structure of this membrane was observed under electron microscope, and as a result, it was confirmed that the open cells having an average pore diameter of 500 nm had been densely filled with a resinous material as a proton conducting material and there had occurred no exfoliation and cracking on the interface of filler with support.

The results of evaluation of the membrane thus obtained are given below.

<Results>

| | |
|---|---|
| Flexing resistance test | O |
| 60°C conductivity (S/cm) | $3.0 \times 10^{-2}$ |

140°C conductivity (S/cm) $4.0 \times 10^{-2}$
140°C heat resistance
Visual O
Dimensional change -0.1%
Flexing resistance O

The evaluation of electricity generation is shown in Fig. 1.

[Example 2]

A three-dimensional network structure was prepared in the same manner as in Example 1.

Subsequently, a solution obtained by dissolving 0.7 g of 3-mercaptopropyltrimethoxysilane (SILA-ACE S810, produced by Chisso Corporation) and 0.015 g of 1,8-bis(dimethylethoxysilyl)octane in 0.63 ml of isopropanol and a solution obtained by adding 0.14 g of a 10 N hydrochloric acid to 0.63 ml of isopropanol were stirred in combination for several minutes, and then poured onto a support prepared in a disc where the mixture was then cured in the same manner as in Example 1 to form a membrane. This membrane was oxidized in a 1.25 : 1 mixture of acetic acid and hydrogen peroxide (30%) over a hot plate having a predetermined temperature of 80°C for 1 hour, and then rinsed in the same manner as in Example 1.

The results of evaluation of the membrane thus obtained are given below.

<Results>

Flexing resistance test O
60°C conductivity (S/cm) $4.1 \times 10^{-2}$
140°C conductivity (S/cm) $5.2 \times 10^{-2}$
140°C heat resistance
Visual O
Dimensional change -0.1%
Flexing resistance O

The evaluation of electricity generation is shown in Fig. 2.

[Example 3]

A membrane was obtained in the same manner as in Example 1 except that a support prepared in the following manner was used instead of the support of Example 1.

0.48 g of 1,8-bis(triethoxysilyl)octane and 0.93 g of 1,8-bis(dimethylethoxysilyl)octane were dissolved in 1.3 ml of isopropanol. 0.29 g of a 7 N hydrochloric acid was added to 1.3 ml of isopropanol. The two solutions were stirred in combination for scores of seconds, and then spread over a corona-treated PET film by a car coater casting method. The membrane thus obtained was covered by a plastic case cover having a size of 20 cm x 30 cm under which it was then cultured at room temperature (20°C) for 60 hours to obtain a white rubbery support. The support was measured for porosity and pore diameter by a porosimeter and for inner structure by SEM, and it was confirmed that an open-cell structure having a porosity of 60 vol-% and an average pore diameter of 200 nm had been formed. In the structure thus obtained, the ratio of metal atom to carbon atom is about 1 : 6.5. Further, the numerical value a in the formula (II) is about 3.1.

The results of evaluation of the membrane thus obtained are given below.

<Results>

Flexing resistance test O
60°C conductivity (S/cm) $3.3 \times 10^{-2}$
140°C conductivity (S/cm) $4.6 \times 10^{-2}$
140°C heat resistance
Visual O

Dimensional change -0.1%
Flexing resistance O

The evaluation of electricity generation was almost the same as in Example 1.

[Example 4]

A membrane was obtained in the same manner as in Example 1 except that a support prepared in the following manner was used instead of the support of Example 1.

0.29 g of 1,8-bis(triethoxysilyl)octane, 0.24 g of 1,8-bis(diethoxymethylsilyl)octane and 0.83 g of 1,8-bis(dimethylethoxysilyl)octane were dissolved in 1.3 ml of isopropanol. Subsequently, 0.07 g of diethylene glycol was dissolved in this solution. 0.28 g of a 8 N hydrochloric acid was added to 1.3 ml of isopropanol. The two solutions were stirred in combination for scores of seconds, and then spread over a corona-treated PET film by a car coater casting method. The membrane thus obtained was covered by a plastic case cover having a size of 20 cm x 30 cm under which it was then cultured at room temperature (20°C) for 60 hours to obtain a white rubbery support. The support was measured for porosity and pore diameter by a porosimeter and for inner structure by SEM, and it was confirmed that an open-cell structure having a porosity of 70 vol-% and an average pore diameter of 800 nm had been formed. In the structure thus obtained, the ratio of metal atom to carbon atom is about 1 : 5.3. Further, the numerical value a in the formula (II) is about 3.0.

The results of evaluation of the membrane thus obtained are given below.

<Results>

Flexing resistance test O
60°C conductivity (S/cm) $3.6 \times 10^{-2}$
140°C conductivity (S/cm) $4.8 \times 10^{-2}$
140°C heat resistance
Visual O
Dimensional change -0.1%
Flexing resistance O

The evaluation of electricity generation was almost the same as in Example 2.

[Example 5]

An organic-inorganic composite structure (support) was prepared in the same manner as in Example 1 except that as starting materials there were used 0.6 g of 1,8-bis(diethoxymethylsilyl)octane, 0.5 g of 1,8-bis(dimethylethoxysilyl)octane and 0.05 g of tetraethoxysilane. It was confirmed that this support had an open-cell structure having a porosity of 60 vol-% and an average pore diameter of 600 nm formed therein. In the structure thus obtained, the ratio of metal atom to carbon atom is about 1 : 5. Further, the numerical value a in the formula (II) is 3.1.

Subsequently, the organic-inorganic composite structure was filled with the proton conducting structure in the same manner as in Example 1.

The results of evaluation of the membrane thus obtained are given below.

<Results>

Flexing resistance test O
60°C conductivity (S/cm) $2.2 \times 10^{-2}$
140°C conductivity (S/cm) $2.8 \times 10^{-2}$
140°C heat resistance
Visual O
Dimensional change 0.0%
Flexing resistance O

[Example 6]

An organic-inorganic composite structure (support) was prepared in the same manner as in Example 1.

Subsequently, a mixture obtained by dissolving 0.3 g of 3-mercaptopropyltrimethoxysilane (SILA-ACE S810, produced by Chisso Corporation) and 0.7 g of tetraethoxysilane in 0.3 ml of isopropanol and a mixture obtained by adding 0.1 g of triethylamine to 0.3 ml of isopropanol were stirred in combination for several minutes, and then poured onto a support prepared in a disc where the mixture was then cured in the same manner as in Example 1 to form a membrane. This membrane was oxidized in a 1.25 : 1 mixture of acetic acid and hydrogen peroxide (30%) over a hot plate having a predetermined temperature of 80°C for 1 hour, and then rinsed in the same manner as in Example 1.

The results of evaluation of the membrane thus obtained are given below.

<Results>

Flexing resistance test O
60°C conductivity (S/cm) 5.5 x $10^{-2}$
140°C conductivity (S/cm) 6.8 x $10^{-2}$
140°C heat resistance
Visual O
Dimensional change 0.1%
Flexing resistance O

[Example 7]

An organic-inorganic composite structure was prepared in the same manner as in Example 1.

Subsequently, 4.4 g of X-41-1805 (product number) (produced by Shin-Etsu Chemical Co., Ltd.), which is a copolymer of 3-mercaptopropyltrimethoxysilane with tetraethoxy silane, 0.5 g of tetraethoxysilane, 0.1 g of a polyethylene glycol (#200), 0.1 g of water, 0.05 g of triethylamine and 0.1 g of methanol were stirred at room temperature for 20 minutes, and then poured onto a support prepared where the mixture was then cured in the same manner as in Example 1 to form a membrane which was then heated in a 250°C oven. This membrane was oxidized in a 1.25 : 1 mixture of acetic acid and hydrogen peroxide (30%) over a hot plate having a predetermined temperature of 80°C for 1 hour, and then rinsed in the same manner as in Example 1.

The results of evaluation of the membrane thus obtained are given below.

<Results>

Flexing resistance test O
60°C conductivity (S/cm) 4.3 x $10^{-2}$
140°C conductivity (S/cm) 5.7 x $10^{-2}$
140°C heat resistance
Visual O
Dimensional change 0.4%
Flexing resistance O

[Example 8]

An organic-inorganic composite structure (support) was prepared in the same manner as in Example 1.

Subsequently, 1.0 g of 3-trihydroxysilylpropane sulfonic acid (35 wt-% aqueous solution produced by Gelest, Inc.), 0.7 g of tetraethoxysilane and 1.0 ml of isopropanol were mixed, stirred for several minutes, and then poured onto a support prepared where the mixture was then cured in the same manner as in Example 1 to form a membrane which was then rinsed in the same manner as in Example 1.

The results of evaluation of the membrane thus obtained are given below.

<Results>

Flexing resistance test O
60°C conductivity (S/cm) $1.8 \times 10^{-2}$
140°C conductivity (S/cm) $2.5 \times 10^{-2}$
140°C heat resistance
Visual O
Dimensional change 0.5%
Flexing resistance O

[Example 9]

An organic-inorganic composite structure (support) was prepared in the same manner as in Example 1.
Subsequently, to a solution obtained by mixing 4.4 g of X-41-1805 (product number) (produced by Shin-Etsu Chemical Co., Ltd.), which is a copolymer of 3-mercaptopropyltrimethoxysilane with tetraethoxy silane with 1.0 g of acetic acid was slowly added 0.9 g of aqueous hydrogen peroxide (30%) while being cooled over an ice water bath, and the mixture was then stirred while being ice-cooled for 1 hour, at room temperature for 1 hour and over a 40°C hot plate for 20 minutes. As a result of infrared spectroscopic analysis, the viscous liquid thus obtained was confirmed to have its mercapto group oxidized by sulfonic acid group.
This acid-containing copolymer (oligomer) and a solution of 10.5 g of tetraethoxysilane in 3. 5 ml of methanol were mixed, stirred at room temperature for 5 minutes, and then poured onto a support prepared where the mixture was then cured to form a membrane which was then rinsed in the same manner as in Example 1.
The results of evaluation of the membrane thus obtained are given below.

<Results>

Flexing resistance test O
60°C conductivity (S/cm) $2.7 \times 10^{-2}$
140°C conductivity (S/cm) $3.8 \times 10^{-2}$
140°C heat resistance
Visual O
Dimensional change 0.3%
Flexing resistance O

[Comparative Example 1]

Curing was attempted in the same manner as in Example 1 except that 0.65 g of 1,8-bis(triethoxysilyl) octane and 0.45 g of 1,8-bis(dimethylethoxysilyl)octane were used instead of 0.6 g of 1,8-bis(diethoxymethyl silyl)octane and 0.5 g of 1,8-bis(dimethylethoxysilyl) octane and 0.27 g of hydrochloric acid was used. As a result, a white semi-transparent membrane which doesn't exhibit rubberiness was obtained instead of white rubbery support. This membrane had a porosity of 20% by volume and an average pore diameter of 30 nm. The inner structure of this membrane was observed under electron microscope, and it was then confirmed that pores having a diameter of from 10 to 50 nm had been present in a partial continuity. To this support was added the same proton conducting structure (conducting agent) as in Example 1, and curing and rinsing were effected in the same procedure. The numerical value a in the formula (II) is about 4.0.
The results of evaluation of the membrane thus obtained are given below.

<Results>

Flexing resistance test O
60°C conductivity (S/cm) $5.0 \times 10^{-4}$
140°C conductivity (S/cm) $6.0 \times 10^{-4}$
140°C heat resistance

Visual O
Dimensional change -0.1%
Flexing resistance O

[Comparative Example 2]

Curing was attempted in the same manner as in Example 1 except that 1.1 g of 1,8-bis(triethoxysilyl) octane was used instead of 0.6 g of 1,8-bis(diethoxymethylsilyl)octane and 0.5 g of 1, 8-bis(dimethylethoxysilyl) octane and 0.35 g of hydrochloric acid was used. As a result, a transparent and hard membrane was obtained instead of white rubbery support. The inner structure of this membrane was observed under electron microscope, and it was then confirmed that this membrane is an assembly of particles having a particle diameter of from 10 to 50 nm. To this support was added the same proton conducting structure (conducting agent) as in Example 1, and curing and rinsing were effected in the same procedure. The numerical value a in the formula (II) is about 6.0.
The results of evaluation of the membrane thus obtained are given below.

<Results>

Flexing resistance test ×
60°C conductivity (S/cm) 6.0 x $10^{-5}$
140°C conductivity (S/cm) 9.0 x $10^{-5}$
140°C heat resistance
Visual O
Dimensional change 0.0%
Flexing resistance ×

[Comparative Example 3]

A membrane was obtained in the same manner as in Example 1 except that the support prepared in the following manner was used instead of the support of Example 1.
0.63 g of 1,8-bis(diethoxymethylsilyl)octane and 0.79 g of 1,8-bis(dimethylethoxysilyl)octane were dissolved in 1.3 ml of isopropanol. 0.27 g of a 7 N hydrochloric acid was added to 1.3 ml of isopropanol. The two solutions were stirred in combination for scores of seconds, and then spread over a corona-treated PET film by a car coater casting method. The membrane thus obtained was covered by a plastic case cover having a size of 20 cm x 30 cm under which it was then cultured at room temperature (20°C) for 60 hours to obtain a white support. The support was measured for porosity and pore diameter by a porosimeter and observed for inner structure under SEM, and it was confirmed that the support is an assembly of particles having a porosity of 30 vol-% and an average pore diameter of from 2 to 3 μm and no three-dimensional network structure is formed. The numerical value a in the formula (II) is about 2.8.
The results of evaluation of the membrane thus obtained are given below.

<Results>

Flexing resistance test O
60°C conductivity (S/cm) 6.6 x $10^{-4}$
140°C conductivity (S/cm) 7.4 x $10^{-4}$
140°C heat resistance
Visual O
Dimensional change -0.2%
Flexing resistance ×

[Comparative Example 4]

A commercially available Nafion 117 was evaluated in the same manner as mentioned above.

<Results>

| | |
|---|---|
| Flexing resistance test | O |
| 60°C conductivity (S/cm) | $8.0 \times 10^{-2}$ |
| 140°C conductivity (S/cm) | $1.0 \times 10^{-1}$ |
| 140°C heat resistance | |
| Visual | × Much deformation |
| Dimensional change | 50% |
| Flexing resistance | O |

As can be seen in the results above, it was found that when a support made of a crosslinked structure having a specific organic-inorganic composite structure and comprising an open-cell structure having pores having a size of from about 0.01 to 10 μm continuously connected thereto is filled with a proton conducting composition, a proton conducting membrane having unprecedentedly excellent durability, dimensional stability, fuel barrier properties and other properties can be obtained. Further, when the aforementioned support is filled with a proton conducting composition made of the same elements as the support and composed of a crosslinked structure having a specific organic-inorganic composite structure and an acid-containing crosslinked structure, both a high protonic conductivity and a high heat resistance can be attained at the same time.

In the evaluation of heat resistance at 140°C (evaluation 3) in particular, the proton conducting membrane undergoes little deformation or other defects and thus is extremely good. It was further confirmed that the use of the membrane of the present invention makes it possible to make electricity generation by fuel cell.

As can be also seen in the evaluation of electricity generation, the membrane of the present invention is provided with gas barrier properties.

It is apparent that these properties are made possible only when the membrane comprises both the organic-inorganic composite structure (α) and the proton conducting structure (β) incorporated therein and no protonic conductivity cannot be obtained when the membrane comprises only the three-dimensional network structure (α) made of organic-inorganic composite structure incorporated therein, though not described in the comparative examples. Further, the membrane comprising only the proton conducting structure (β) containing an acid-containing structure incorporated therein is relatively brittle and thus can be continuously or discontinuously used over an extended period of time.

Accordingly, the constitution that a support made of an organic-inorganic composite structure (α) having a crosslinked structure formed by a metal-oxygen bond and an open-cell structure having internally-formed pores connected continuously to each other by the aforesaid crosslinked structure is filled with a proton conducting structure (β) comprising an acid-containing structure containing an acid group, which is a requirement of the present invention, is essential for high temperature durability fuel cells. By satisfying this requirement, a self-supporting membrane which exhibits a stable protonic conductivity from low temperature to high temperature and can be bent can be obtained.

On the other hand, the fluorine-based membrane which has been heretofore used as a representative electrolyte membrane exhibits a high initial conductivity and a relatively good conductivity even after high temperature durability test but undergoes drastic irreversible deformation after high temperature durability test and becomes hard and brittle when dried and it is thus apparent that the conventional membrane cannot be used as it is for high temperature-working PEFC.

While the present invention has been described in detail and with reference to specific embodiments thereof, it will be apparent to one skilled in the art that various changes and modifications can be made therein without departing from the spirit and scope thereof.

The present application is based on Japanese Patent Application (Tokugan 2003-122766), filed on April 25, 2003 and Japanese Patent Application (Tokugan 2004-9471), filed on January 16, 2004, and herein incorporated by reference.

<Industrial Applicability>

The proton conducting membrane of the present invention solves the aforementioned problems with the conventional polymer electrolyte fuel cells, is excellent in heat resistance, durability, dimensional stability, fuel barrier properties, flexibility, etc. and exhibits an excellent protonic conductivity even at high temperatures and thus can be used in the art of fuel cell, particularly for polymer electrolyte fuel cell, to advantage.

**Claims**

1. A proton conducting membrane comprising a support filled with a proton conducting structure (β) comprising an acid-containing structure containing an acid group, the support comprising an organic-inorganic composite structure (α) having a crosslinked structure formed by a metal-oxygen bond and an open-cell structure having internally-formed pores connected continuously to each other by said crosslinked structure,
wherein the organic-inorganic composite structure (α) comprises at least a structure represented by the following formula (1):

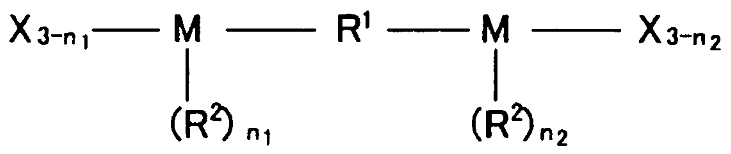

· · · (1)

wherein M represents a silicon atom; X represents -O-bond taking part in crosslinking or OH group; $R^1$ represents a $C_1$-$C_{50}$ carbon atom-containing molecular chain; $R^2$ represents a methyl, ethyl, propyl or phenyl group; and n1 and n2 each represent 0, 1 or 2, with the proviso that at least one of n1 and n2 represents 1 or 2,
wherein the number of the groups X taking part in the crosslinking of the organic-inorganic composite structure. (α) represented by the chemical formula (1) is represented by the following numerical formula (II):

$$\sum_{i=1}^{P} m_i \{6 - (n_1^i + n_2^i)\} = a$$

a: 2.9<a<3.5 ... (II)

wherein P is the number of the kinds of the compound corresponding to the chemical formula (1) contained in the organic-inorganic composite structure (α) which is an integer of 1 or more; i represents an integer of from 1 to P; $n1^i$ and $n2^i$ represent n1 and n2 in the formula (1) in the organic-inorganic composite structure (α)i, respectively, which each are 0, 1 or 2, with the proviso that at least one of $n1^i$ and $n2^i$ is 1 or 2; and $m_i$ represents a molar fraction, and wherein the proton conducting structure (β) has a crosslinked structure formed by metal-oxygen atom and comprises an acid group-containing structure (A) represented by the following formula (3):

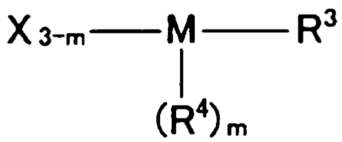

· · · (3)

wherein M represents a silicon atom; X represents -O-bond taking part in crosslinking or OH group; $R^3$ represents a molecular chain having at least one acid group; $R^4$ represents any of methyl, ethyl, propyl and phenyl groups; and m represents 0, 1 or 2.

2. The proton conducting membrane as described in Claim 1, wherein the ratio of the number of metallic atoms to carbon atoms in the organic-inorganic composite structure (α) falls within a range of from 2 : 1 to 1 : 25.

3. The proton conducting membrane as described in Claim 1 or 2, wherein the metallic atom in the organic-inorganic composite structure (α) is silicon atom.

4. The proton conducting membrane as described in any one of Claims 1 to 3, wherein the porosity of the open-cell

structure falls within a range of from 20 to 95% by volume based on the support comprising the organic-inorganic composite structure (α).

**5.** The proton conducting membrane as described in any one of Claims 1 to 4, wherein a diameter of the pores is from 0.01 to 10 μm.

**6.** The proton conducting membrane as described in Claim 1 to 5, wherein a in the numerical formula (II) is 3.0.

**7.** The proton conducting membrane as described in Claims 1 to 6, wherein $R^3$ in the formula (3) is a structure represented by the following formula (12):

$$-(CH_2)_n-SO_3H \qquad (12)$$

wherein n represents an integer of from 1 to 20.

**8.** The proton conducting membrane as described in Claims 1 to 6, wherein the proton conducting structure (β) comprises a metal-oxygen bond structure (B) connected to the structure of the formula (3) by a metal-oxygen bond besides the acid group-containing structure represented by the formula (3).

**9.** The proton conducting membrane as described in Claim 8, wherein the metal-oxygen bond structure (B) comprises an organic-inorganic composite structure (2) represented by the following formula:

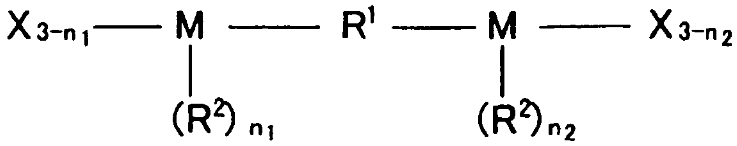

• • • (2)

wherein M represents a silicon atom; X represents -O-bond taking part in crosslinking or OH group; $R^1$ represents a $C_1$-$C_{50}$ carbon atom-containing molecular chain; $R^2$ represents any of methyl, ethyl, propyl and phenyl groups; and n1 and n2 each represent 0, 1 or 2

**10.** The proton conducting membrane as described in Claim 8, wherein the metal-oxygen bond structure (B) comprises a structure represented by the following formula (6):

$$M(R^2)_m(X)_{4-m} \qquad (6)$$

wherein M represents a metallic atom; X represents -O-bond taking part in crosslinking or OH group; $R^2$ represents any of methyl, ethyl, propyl and phenyl groups; and m represents 0, 1 or 2.

**11.** The proton conducting membrane as described in Claim 10, wherein M in the formula (6) is a silicon atom.

**12.** The proton conducting membrane as described in Claim 10, wherein m in the formula (6) is 0.

**13.** A method of producing a proton conducting membrane as described in Claim 1, wherein the organic-inorganic composite structure (α) is produced by a method comprising a step of preparing a mixture containing an organic-inorganic composite crosslinkable compound (C) terminated by a crosslinkable silyl group and a carbon group covalently connected thereto, a step of forming said mixture into a film and a step of subjecting the crosslinkable silyl group contained in the mixture thus film-formed to hydrolysis and/or condensation, followed by
a step of filling the organic-inorganic composite structure (α) with a mixture comprising an acid group-containing compound (D) containing at least a crosslinkable silyl group and an acid group and then subjecting the crosslinkable silyl group contained in the mixture which has thus filled the structure (α) to hydrolysis and/or condensation to form a crosslinked structure of proton conducting structure (β) inside the organic-inorganic composite structure (α),
wherein the organic-inorganic composite crosslinkable compound (C) is represented by the following formula (4):

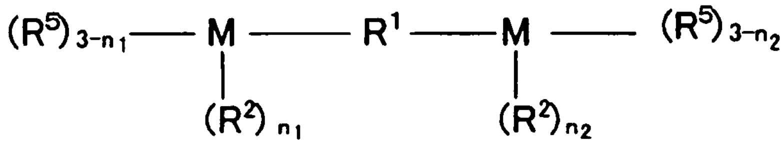 ... (4)

wherein M represents a silicon atom; $R^1$ represents a $C_1$-$C_{50}$ carbon atom-containing molecular chain; $R^2$ represents any of methyl, ethyl, propyl and phenyl groups; $R^5$ represents any of Cl, OH, $OCH_3$, $OC_2H_5$, $OC_3H_7$, $OC_4H_9$, $OC_6H_5$ and $OCOCH_3$; and n1 and n2 each represent 0, 1 or 2, with the proviso that at least one of n1 and n2 is 1 or 2, and wherein the number of hydrolyzable groups in the organic-inorganic composite crosslinkable compound (C) represented by the formula (4) is represented by the following numerical formula (II):

$$\sum_{i=1}^{P} m_i \{6-(n_1^i+n_2^i)\} = a \qquad a: 2.9<a<3.5 \qquad \ldots \text{(II)}$$

wherein P is the number of the kinds of the organic-inorganic composite crosslinkable compound (C) which is an integer of 1 or more; i represents an integer of from 1 to P; $n1^i$ and $n2^i$ represent n1 and n2 in the formula (4) in the organic-inorganic composite crosslinkable compound (C)i, respectively, which each are 0, 1 or 2, with the proviso that at least one of $n1^i$ and $n2^i$ is 1 or 2; and $m_i$ represents a molar fraction.

**14.** The method of producing a proton conducting membrane as described in Claim 13, wherein a in the numerical formula (II) is 3.0.

**15.** The method of producing a proton conducting membrane as described in Claim 13, further comprising a step of adding a catalyst in an amount arranged such that water is present in an amount of from 0.5 to 1.5 equivalents to the crosslinkable silyl group in the organic-inorganic composite crosslinkable compound (C).

**16.** The method of producing a proton conducting membrane as described in Claim 13, wherein a Brønsted acid is used as a catalyst during the hydrolysis of the crosslinkable silyl group in the organic-inorganic composite crosslinkable compound (C).

**17.** The method of producing a proton conducting membrane as described in Claim 13, further comprising a step of mixing the organic-inorganic composite crosslinkable compound (C) with a solvent in an amount of from 0.5 to 10 ml per g of the solid content of the organic-inorganic composite crosslinkable compound (C).

**18.** The method of producing a proton conducting membrane as described in Claim 13, wherein the acid group-containing compound (D) has a structure represented by the following formula (7):

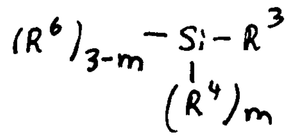 (7)

wherein $R^6$ represents any of OH, $OCH_3$, $OC_2H_5$ and $OC_3H_7$; $R^3$ represents a molecular chain having at least one acid group; $R^4$ represents any of methyl, ethyl, propyl and phenyl groups; and m represents 0, 1 or 2.

**19.** The method of producing a proton conducting membrane as described in Claim 13, wherein the acid group-containing compound (D) comprises one having a structure represented by the following formula (8):

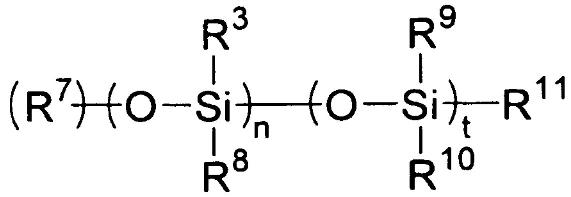

(8)

wherein $R^3$ represents a molecular chain having at least one acid group; $R^7$ represents a group selected from the group consisting of H, $CH_3$, $C_2H_5$, $C_3H_7$, $C_4H_9$ and $C_6H_5$ which may have a branched structure that partly constitutes -Si bond or an intramolecular annular structure; $R^8$, $R^9$, $R^{10}$ and $R^{11}$ each represent a group selected from the group consisting of $R^3$, OH, $OCH_3$, $OC_2H_5$, $OC_3H_7$, $OC_4H_9$, $OC_6H_5$, $CH_3$, $C_2H_5$, $C_3H_7$, $C_4H_9$ and $C_6H_5$ that partly constitutes -OSi bond or an intramolecular annular structure; n represents an integer of from 1 to 50; t represents an integer of from 0 to 50, with the proviso that the sum of n and t is not greater than 100; and the compound may be a combination of compounds wherein n and t are the same or different.

**20.** The method of producing a proton conducting membrane as described in Claim 18 or 19, wherein $R^3$ in the formula (7) or (8) is a structure represented by the following formula (12):

$$-(CH_2)_n-SO_3H \qquad (12)$$

wherein n represents an integer of from 1 to 20.

**21.** The method of producing a proton conducting membrane as described in any one of Claims 13 to 20, wherein the mixture filling the organic-inorganic composite structure (α) comprises a crosslinkable compound (F) represented by the following formula (16) besides the acid group-containing compound (D) containing a crosslikable silyl group and an acid group:

$$M(R^2)_m(R^5)_{4-m} \qquad (16)$$

wherein M represents a metallic atom; $R^5$ represents any of OH, $OCH_3$, $OC_2H_5$, $OC_3H_7$, $OC_4H_9$, $OC_6H_5$, Cl and $OCOCH_3$; $R^2$ represents any of methyl, ethyl, propyl and phenyl groups; and m represents 0, 1 or 2.

**22.** A method of producing a proton conducting membrane, wherein the proton conducting membrane (β) described in Claim 1 is produced by a method comprising a step of filling the organic-inorganic composite structure (α) with a mixture comprising an acid group precursor-containing compound (E) containing at least a crosslinkable silyl group and an acid precursor group capable of being converted to an acid group and then subjecting the crosslinkable silyl group contained in the mixture which has thus filled the structure (α) to hydrolysis and/or condensation to form a crosslinked structure and a step of subjecting the acid group precursor in the acid group precursor-containing compound (E) to oxidation and/or hydrolysis to produce an acid group, thereby forming a proton conducting structure (β) having an acid group inside the organic-inorganic composite structure (α).

**23.** The method of producing a proton conducting membrane as described in Claim 22, wherein the acid group precursor-containing compound (E) has a structure represented by the following formula (17):

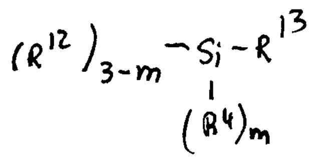

(17)

wherein $R^{12}$ represents any of OH, $OCH_3$, $OC_2H_5$ and $OC_3H_7$; $R^{13}$ represents a molecular chain having at least one acid group precursor; $R^4$ represents any of methyl, ethyl, propyl and phenyl groups; and m represents 0, 1 or 2.

**24.** A method of producing a proton conducting membrane as described in Claim 22, wherein the acid group precursor-containing compound (E) has a structure represented by the following chemical formula (13):

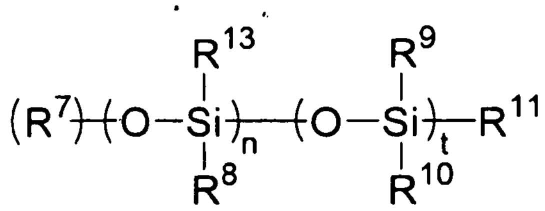

(13)

wherein $R^{13}$represents a molecular chain having at least one acid group precursor; $R^7$ represents a group selected from the group consisting of H, $CH_3$, $C_2H_5$, $C_3H_7$, $C_4H_9$ and $C_6H_5$ which may have a branched structure that partly constitutes -Si bond or an intramolecular annular structure; $R^8$, $R^9$, $R^{10}$ and $R^{11}$ each represent a group selected from the group consisting of $R^{13}$, OH, $OCH_3$, $OC_2H_5$, $OC_3H_7$, $OC_4H_9$, $OC_6H_5$, $CH_3$, $C_2H_5$, $C_3H_7$, $C_4H_9$ and $C_6H_5$ that partly constitutes -OSi bond or an intramolecular annular structure; n represents an integer of from 1 to 50; t represents an integer of from 0 to 50, with the proviso that the sum of n and t is not greater than 100; and the compound may be a combination of compounds wherein n and t are the same or different.

**25.** The method of producing a proton conducting membrane as described in Claim 23 or 24, wherein $R^3$ in the formula (16) or (13) is a structure represented by the following formula (15):

$$-(CH_2)_n-SH \qquad (15)$$

wherein n represents an integer of from 1 to 20.

**26.** The method of producing a proton conducting membrane as described in any one of Claims 22 to 25, wherein the proton conducting structure (β) filling the organic-inorganic composite structure (α) comprises a crosslinkable compound (F) represented by the following formula (14) besides the acid group precursor-containing compound (E):

$$M(R^2)_m(R^6)_{4-m} \qquad (14)$$

wherein M represents a metallic atom; $R^6$ represents any of OH, $OCH_3$, $OC_2H_5$, $OC_3H_7$, $OC_4H_9$, $OC_6H_5$, Cl and $OCOCH_3$; $R^2$ represents any of methyl, ethyl, propyl and phenyl groups; and m represents 0, 1 or 2.

**27.** A fuel cell comprising a proton conducting membrane as described in any one of Claims 1 to 12.

**Patentansprüche**

**1.** Protonenleitende Membran, umfassend einen Träger, der mit einer protonenleitenden Struktur (β) gefüllt ist, umfassend eine säurehaltige Struktur, die eine Säuregruppe enthält, wobei der Träger eine organisch-anorganische Verbundstruktur (α) mit einer vernetzten Struktur umfasst, die durch eine Metall-Sauerstoffbindung gebildet ist, und eine offenzellige Struktur mit im Inneren gebildeten Poren, die durch die vernetzte Struktur kontinuierlich miteinander verbunden sind,
wobei die organisch-anorganische Verbundstruktur α mindestens eine Struktur umfasst, die durch die folgende Formel (1) dargestellt ist:

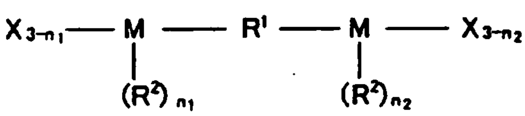

· · · (1)

wobei M ein Siliziumatom darstellt, X eine -O-Bindung darstellt, die an der Vernetzung beteiligt ist, oder eine OH-

Gruppe; $R^1$ eine $C_1$-$C_{50}$-Kohlenstoffatom enthaltende Molekularkette darstellt; $R^2$ eine Methyl-, Ethyl-, Propyl- oder Phenylgruppen darstellt; und n1 und n2 jeweils 0, 1 oder 2 darstellen, unter der Voraussetzung, dass mindestens eines von n1 und n2 1 oder 2 darstellt,
wobei die Anzahl der Gruppen X, die an der Vernetzung der organisch-anorganischen Verbundstruktur (α) beteiligt sind, die durch die chemische Formel (1) dargestellt sind, durch folgende numerische Formel (II) dargestellt ist:

$$\sum_{i=1}^{P} m_i \left\{6 - \left(n_1^i + n_2^i\right)\right\} = a$$

$$a:\ 2{,}9 < a < 3{,}5 \qquad \ldots (II)$$

wobei P die Anzahl der Arten der Verbindung ist, die der chemischen Formel (1) entspricht, die in der organisch-anorganischen Verbundstruktur (α) enthalten ist, die eine ganze Zahl von 1 oder mehr ist; i eine ganze Zahl von 1 bis P dargestellt; $n1^i$ und $n2^i$ n1 bzw. n2 in der Formel (1) in der organisch-anorganischen Verbundstruktur (α)i darstellen, wobei jedes 0, 1 oder 2 ist, unter der Voraussetzung, dass mindestens eines von $n1^i$ und $n2^i$ 1 oder 2 ist; und $m_i$ eine Molfraktion darstellt, und
wobei die protonenleitende Struktur (β) eine vernetzte Struktur hat, die durch Metall-Sauerstoff-Atom gebildet ist und eine eine Säuregruppe enthaltende Struktur (A) umfasst, die durch die folgende Formel (3) dargestellt ist:

$$X_{3-m}-\underset{\underset{(R^4)_m}{|}}{M}-R^3 \qquad \cdots (3)$$

wobei M ein Siliziumatom darstellt; X eine -O-Bindung darstellt, die an der Vernetzung beteiligt ist, oder eine OH-Gruppe; $R^3$ eine Molekularkette mit mindestens einer Säuregruppe darstellt; $R^4$ eine beliebige von Methyl-, Ethyl-, Propyl- oder Phenylgruppen darstellt; und m 0, 1 oder 2 darstellt.

**2.** Protonenleitende Membran nach Anspruch 1, wobei das Verhältnis der Anzahl von metallischen Atomen zu Kohlenstoffatomen in der organisch-anorganischen Verbundstruktur (α) in einen Bereich von 2:1 bis 1:25 fällt.

**3.** Protonenleitende Membran nach Anspruch 1 oder 2, wobei das metallische Atom in der organisch-anorganischen Verbundstruktur (α) ein Siliziumatom ist.

**4.** Protonenleitende Membran nach einem der Ansprüche 1 bis 3, wobei die Porosität der offenzelligen Struktur in einen Bereich von 20 bis 95 Volumsprozent fällt, bezogen auf den Träger, der die organisch-anorganische Verbundstruktur (α) umfasst.

**5.** Protonenleitende Membran nach einem der Ansprüche 1 bis 4, wobei ein Durchmesser der Poren 0,01 bis 10 μm beträgt.

**6.** Protonenleitende Membran nach einem der Ansprüche 1 bis 5, wobei a in der numerischen Formel (II) 3,0 ist.

**7.** Protonenleitende Membran nach einem der Ansprüche 1 bis 6, wobei $R^3$ in der Formel (3) eine Struktur ist, die durch die folgenden Formel (12) dargestellt ist:

$$-(CH_2)_n-SO_3H \qquad (12)$$

wobei n eine ganze Zahl von 1 bis 20 darstellt.

**8.** Protonenleitende Membran nach einem der Ansprüche 1 bis 6, wobei die protonenleitende Struktur (β) eine Metall-Sauerstoff-Bindungsstruktur (B) umfasst, die mit der Struktur der Formel (3) durch eine Metall-Sauerstoff-Bindung neben der Säuregruppe enthaltenden Struktur verbunden ist, die durch die Formel (3) dargestellt ist.

**9.** Protonenleitende Membran nach Anspruch 8, wobei die Metall-Sauerstoff-Bindungsstruktur (B) eine organische-anorganische-Verbundstruktur (2) umfasst, die durch die folgende Formel dargestellt ist:

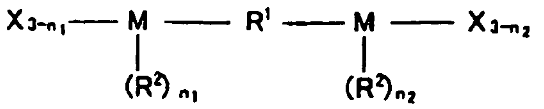

. . . (2)

wobei M ein Siliziumatom darstellt; X eine -O-Bindung darstellt, die an der Vernetzung beteiligt ist, oder eine OH-Gruppe; $R^1$ eine $C_1$-$C_{50}$-Kohlenstoffatom enthaltende Molekularkette darstellt; $R^2$ eine beliebige von Methyl-, Ethyl-, Propyl- oder Phenylgruppen darstellt; und n1 und n2 jeweils 0, 1 oder 2 darstellen.

**10.** Protonenleitende Membran nach Anspruch 8, wobei die Metall-Sauerstoff-Bindungsstruktur (B) eine Struktur umfasst, die durch die folgende Formel (6) dargestellt ist:

$$M(R^2)_m(X)_{4-m} \qquad (6)$$

wobei M ein metallisches Atom darstellt; X eine -O-Bindung darstellt, die an der Vernetzung beteiligt ist, oder eine OH-Gruppe; $R^2$ eine beliebige von Methyl-, Ethyl-, Propyl- oder Phenylgruppen darstellt; und m 0, 1 oder 2 darstellt.

**11.** Protonenleitende Membran nach Anspruch 10, wobei M in der Formel (6) ein Siliziumatom ist.

**12.** Protonenleitende Membran nach Anspruch 10, wobei m in der Formel (6) 0 ist.

**13.** Verfahren zum Erzeugen einer protonenleitenden Membran nach Anspruch 1, wobei die organisch-anorganische Verbundstruktur (α) durch ein Verfahren erzeugt wird, das einen Schritt des Herstellens eines Gemisches umfasst, das eine den organisch-anorganisch Verbund vernetzbare Verbindung (C) enthält, die in einer vernetzbaren Silylgruppe und einer Kohlenstoffgruppe, die kovalent mit dieser verbunden ist, endet, einen Schritt des Bildens des Gemisches zu einem Film und einen Schritt des Unterziehens der vernetzbaren Silylgruppe, die in dem derart zu einem Film gebildeten Gemisch enthalten ist, einer Hydrolyse und/oder Kondensation, gefolgt von
einem Schritt des Füllens der organisch-anorganischen Verbundstruktur (α) mit einem Gemisch, das eine Säuregruppe enthaltende Verbindung (D) enthält, die mindestens eine vernetzbare Silylgruppe und eine Säuregruppe enthält, und des anschließenden Unterziehens der vernetzbaren Silylgruppe, die in dem Gemisch enthalten ist, mit dem somit die Struktur (α) gefüllt wurde, einer Hydrolyse und/oder Kondensation, um eine vernetzte Struktur aus protonenleitender Struktur (β) im Inneren der organisch-anorganischen Verbundstruktur (α) zu bilden,
wobei die den organisch-anorganischen Verbund vernetzbare Verbindung (C) durch die folgende Formel (4) dargestellt ist:

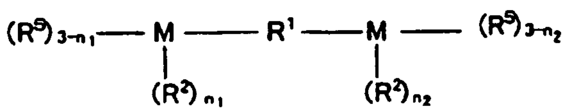

. . . (4)

wobei M ein Siliziumatom darstellt, $R^1$ eine $C_1$-$C_{50}$-Kohlenstoffatom enthaltende Molekularkette darstellt; $R^2$ eine beliebige von Methyl-, Ethyl-, Propyl- oder Phenylgruppen darstellt; $R^5$ eines von Cl, OH, $OCH_3$, $OC_2H_5$, $OC_3H_7$, $OC_4H_9$, $OC_6H_5$ und $OCOCH_3$ darstellt; und n1 und n2 jeweils 0, 1 oder 2 darstellen, unter der Voraussetzung, dass mindestens eines von n1 und n2 1 oder 2 ist, und
wobei die Anzahl von hydrolysierbaren Gruppen in der den organisch-anorganischen Verbund vernetzbaren Verbindung (C), die durch die Formel (4) dargestellt ist, durch die folgende numerische Formel (II) dargestellt ist:

$$\sum_{i=1}^{P} m_1 \left\{6-\left(n_1^i + n_2^i\right)\right\} = a$$

$$a:\ 2{,}9 < a < 3{,}5 \quad \ldots\ (II)$$

wobei P die Anzahl der Arten der den organisch-anorganischen Verbund vernetzbaren Verbindung (C) ist, die eine ganze Zahl von 1 oder mehr ist; i eine ganze Zahl von 1 bis P dargestellt; $nl^i$ und $n2^i$ n1 bzw. n2 in der Formel (4) in der den organisch-anorganischen Verbund vernetzbaren Verbindung (C)i darstellen, wobei jedes 0, 1 oder 2 ist, unter der Voraussetzung, dass mindestens eines von $n1^i$ und $n2^i$ 1 oder 2 ist; und $m_i$ eine Molfraktion darstellt.

**14.** Verfahren zum Erzeugen einer protonenleitenden Membran nach Anspruch 13, wobei a in der numerischen Formel (II) 3,0 ist.

**15.** Verfahren zum Erzeugen einer protonenleitenden Membran nach Anspruch 13, des Weiteren umfassend einen Schritt des Zusetzens eines Katalysators in einer Menge, die derart gestaltet ist, dass Wasser in einer Menge von 0,5 bis 1,5 Äquivalenten vorhanden ist, zu der vernetzbaren Silylgruppe in der den organisch-anorganischen Verbund vernetzbaren Verbindung (C).

**16.** Verfahren zum Erzeugen einer protonenleitenden Membran nach Anspruch 13, wobei eine Br∅nsted-Säure als Katalysator während der Hydrolyse der vernetzbaren Silylgruppe in der den organisch-anorganischen Verbund vernetzbaren Verbindung (C) verwendet wird.

**17.** Verfahren zum Erzeugen einer protonenleitenden Membran nach Anspruch 13, des Weiteren umfassend einen Schritt des Mischens der den organisch-anorganischen Verbund vernetzbaren Verbindung (C) mit einem Lösemittel in einer Menge von 0,5 bis 10 ml pro g des Feststoffgehalts der den organisch-anorganischen Verbund vernetzbaren Verbindung (C).

**18.** Verfahren zum Erzeugen einer protonenleitenden Membran nach Anspruch 13, wobei die Säuregruppe enthaltende Verbindung (D) eine Struktur aufweist, die durch die folgende Formel (7) dargestellt ist:

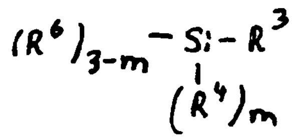

(7)

wobei $R^6$ eines von OH, $OCH_3$, $OC_2H_5$ und $OC_3H_7$ darstellt; $R^3$ eine Molekularkette mit mindestens einer Säuregruppe darstellt; $R^4$ eine beliebige von Methyl-, Ethyl-, Propyl- oder Phenylgruppen darstellt; und m 0, 1 oder 2 darstellt.

**19.** Verfahren zum Erzeugen einer protonenleitenden Membran nach Anspruch 13, wobei die Säuregruppe enthaltende Verbindung (D) jene mit einer Struktur umfasst, die durch die folgende Formel (8) dargestellt ist:

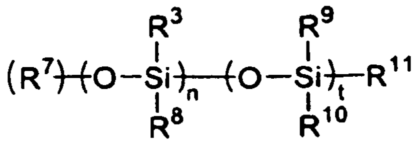

(8)

wobei $R^3$ eine Molekularkette mit mindestens einer Säuregruppe darstellt; $R^7$ eine Gruppe darstellt, die ausgewählt ist aus der Gruppe bestehend aus H, $CH_3$, $C_2H_5$, $C_3H_7$, $C_4H_9$ und $C_6H_5$, die eine verzweigte Struktur aufweisen kann, die teilweise eine -Si-Bindung oder eine intramolekulare Ringstruktur bildet; $R^8$, $R^9$, $R^{10}$ und $R^{11}$ jeweils eine

Gruppe darstellen, die ausgewählt ist aus der Gruppe bestehend aus $R^3$, OH, $OCH_3$, $OC_2H_5$, $OC_3H_7$, $OC_4H_9$, $OC_6H_5$, $CH_3$, $C_2H_5$, $C_3H_7$, $C_4H_9$ und $C_6H_5$, die teilweise eine -OSi-Bindung oder eine intramolekulare Ringstruktur bildet; n eine ganze Zahl von 1 bis 50 darstellt; t eine ganze Zahl von 0 bis 50 darstellt, unter der Voraussetzung, dass die Summe von n und t nicht größer als 100 ist; und die Verbindung eine Kombination von Verbindungen sein kann, in der n und t gleich oder verschieden sind.

**20.** Verfahren zum Erzeugen einer protonenleitenden Membran nach Anspruch 18 oder 19, wobei $R^3$ in der Formel (7) oder (8) eine Struktur ist, die durch die folgende Formel (12) dargestellt ist:

$$-(CHZ)_n-SO_3H \qquad (12)$$

wobei n eine ganze Zahl von 1 bis 20 darstellt.

**21.** Verfahren zum Erzeugen einer protonenleitenden Membran nach einem der Ansprüche 13 bis 20, wobei das Gemisch, das die organisch-anorganische Verbundstruktur ($\alpha$) füllt, eine vernetzbare Verbindung (F), die durch die folgende Formel (16) dargestellt ist, neben der Säuregruppe enthaltenden Verbindung (D) umfasst, die ein vernetzbare Silylgruppe und eine Säuregruppe enthält:

$$M(R^2)_m(R^5)_{4-m} \qquad (16)$$

wobei M ein metallisches Atom darstellt; $R^5$ eines von OH, $OCH_3$, $OC_2H_5$, $OC_3H_7$, $OC_4H_9$, $OC_6H_5$, Cl und $OCOCH_3$ darstellt; $R^2$ eine beliebige von Methyl-, Ethyl-, Propyl- oder Phenylgruppen darstellt; und m 0, 1 oder 2 darstellt.

**22.** Verfahren zum Erzeugen einer protonenleitenden Membran wobei die protonenleitende Membran ($\beta$), die in Anspruch 1 beschrieben ist, durch ein Verfahren erzeugt wird, das einen Schritt des Füllens der organisch-anorganischen Verbundstruktur ($\alpha$) mit einem Gemisch enthält, das eine einen Säuregruppenvorläufer enthaltende Verbindung (E) umfasst, die mindestens eine vernetzbare Silylgruppe und eine Säurevorläufergruppe, die imstande ist in eine Säuregruppe umgesetzt zu werden, enthält, und des anschließenden Unterziehens der vernetzbaren Silylgruppe, die in dem Gemisch enthalten ist, mit dem somit die Struktur ($\alpha$) gefüllt wurde, einer Hydrolyse und/oder Kondensation zur Bildung einer vernetzten Struktur, sowie einen Schritt des Unterziehens des Säuregruppenvorläufers in der einen Säuregruppenvorläufer enthaltende Verbindung (E) einer Oxidation und/oder Hydrolyse, um eine Säuregruppe zu bilden, wodurch eine protonenleitende Struktur ($\beta$) mit einer Säuregruppe im Inneren der organisch-anorganischen Verbundstruktur ($\alpha$) gebildet wird.

**23.** Verfahren zum Erzeugen einer protonenleitenden Membran nach Anspruch 22, wobei die einen Säuregruppenvorläufer enthaltende Verbindung (E) eine Struktur aufweist, die durch die folgende Formel (17) dargestellt ist:

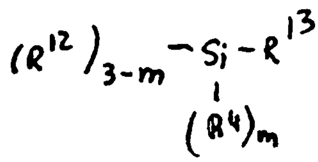

(17)

wobei $R^{12}$ eines von OH, $OCH_3$, $OC_2H_5$ und $OC_3H_7$ darstellt; $R^{13}$ eine Molekularkette mit mindestens einem Säuregruppenvorläufer darstellt; $R^4$ eine beliebige von Methyl-, Ethyl-, Propyl- oder Phenylgruppen darstellt; und m 0, 1 oder 2 darstellt.

**24.** Verfahren zum Erzeugen einer protonenleitenden Membran nach Anspruch 22, wobei die einen Säuregruppenvorläufer enthaltende Verbindung (E) eine Struktur aufweist, die durch die folgende chemische Formel (13) dargestellt ist:

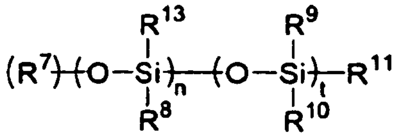 (13)

wobei $R^{13}$ eine Molekularkette mit mindestens einem Säuregruppenvorläufer darstellt; $R^7$ eine Gruppe darstellt, die ausgewählt ist aus der Gruppe bestehend aus H, $CH_3$, $C_2H_5$, $C_3H_7$, $C_4H_9$ und $C_6H_5$, die eine verzweigte Struktur aufweisen kann, die teilweise eine -Si-Bindung oder eine intramolekulare Ringstruktur bildet; $R^8$, $R^9$ $R^{10}$ und $R^{11}$ jeweils eine Gruppe darstellen, die ausgewählt ist aus der Gruppe bestehend aus $R^{13}$, OH, $OCH_3$, $OC_2H_5$, $OC_3H_7$, $OC_4H_9$, $OC_6H_5$, $CH_3$, $C_2H_5$, $C_3H_7$, $C_4H_9$ und $C_6H_5$, die teilweise eine -OSi-Bindung oder eine intramolekulare Ringstruktur bildet; n eine ganze Zahl von 1 bis 50 darstellt; t eine ganze Zahl von 0 bis 50 darstellt, unter der Voraussetzung, dass die Summe von n und t nicht größer als 100 ist; und die Verbindung eine Kombination von Verbindungen sein kann, in der n und t gleich oder verschieden sind.

**25.** Verfahren zum Erzeugen einer protonenleitenden Membran nach Anspruch 23 oder 24, wobei $R^3$ in der Formel (16) oder (13) eine Struktur ist, die durch die folgende Formel (15) dargestellt ist:

$$-(CH_2)n-SH \qquad (15)$$

wobei n eine ganze Zahl von 1 bis 20 darstellt.

**26.** Verfahren zum Erzeugen einer protonenleitenden Membran nach einem der Ansprüche 22 bis 25, wobei die protonenleitende Struktur (β), die die organisch-anorganische Verbundstruktur (α) füllt, eine vernetzbare Verbindung (F), die durch die folgende Formel (14) dargestellt ist, neben der einen Säuregruppe-Vorläufer enthaltenden Verbindung (E) umfasst:

$$M(R^2)_m(R^6)_{4-m} \qquad (14)$$

wobei M ein metallisches Atom darstellt; $R^6$ eines von OH, $OCH_3$, $OC_2H_5$, $OC_3H_7$, $OC_4H_9$, $OC_6H_5$, Cl und $OCOCH_3$ darstellt; $R^2$ eine beliebige von Methyl-, Ethyl-, Propyl- oder Phenylgruppen darstellt; und m 0, 1 oder 2 darstellt.

**27.** Brennstoffzelle, umfassend eine protonenleitende Membran nach einem der Ansprüche 1 bis 12.

**Revendications**

**1.** Membrane conductrice de protons comprenant un support rempli avec une structure conductrice de protons (β) comprenant une structure contenant un groupe acide, le support comprenant une structure composite organique-inorganique (α) possédant une structure réticulée formée par une liaison métal-oxygène et une structure poreuse possédant des pores formés à l'intérieur reliés de manière continue les uns aux autres par ladite structure réticulée, dans laquelle la structure composite organique-inorganique (α) comprend au moins une structure représentée par la formule (1) suivante:

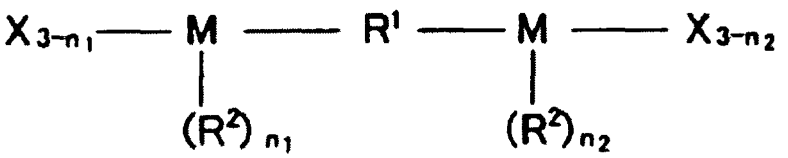 • • • (1)

dans laquelle M représente un atome de silicium ; X représente -O-liaison prenant part à la réticulation ou un groupe OH ; $R^1$ représente une chaîne moléculaire contenant de 1 à 50 atomes de carbone ; $R^2$ représente un groupe méthyle, éthyle, propyle ou phényle ; et n1 et n2 représentent chacun 0, 1 ou 2, à condition qu'au moins un de n1

et n2 représente 1 ou 2, dans laquelle le nombre de groupes X prenant part à la réticulation de la structure composite organique-inorganique (α) représentée par la formule chimique (1) est représenté par la formule numérique (II) suivante:

$$\sum_{i=1}^{P} m_i \{6-(n_1^i+n_2^i)\} = a$$

$$a : 2,9 < a < 3,5 \qquad (II)$$

dans laquelle P est le nombre de types de composés correspondant à la formule chimique (1) contenus dans la structure composite organique-inorganique (α) qui est un nombre entier valant 1 ou plus ; i représente un nombre entier de 1 à P ; $n1^i$ et $n2^i$ représentent respectivement n1 et n2 dans la formule (1) de la structure composite organique-inorganique (α)i, chacun étant 0, 1 ou 2, à condition qu'au moins un de $n1^i$ et $n2^i$ soit 1 ou 2; et $m_i$ représente une fraction molaire, et dans laquelle la structure conductrice de protons (β) possède une structure réticulée formée par un métal-atome d'oxygène et comprend une structure contenant un groupe acide (A) représentée par la formule (3) suivante:

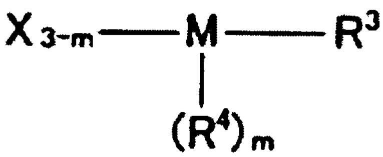

• • • (3)

dans laquelle M représente un atome de silicium ; X représente -O-liaison prenant part à la réticulation ou un groupe OH ; $R^3$ représente une chaîne moléculaire possédant au moins un groupe acide; $R^4$ représente l'un quelconque des groupes méthyle, éthyle, propyle et phényle ; et m représente 0, 1 ou 2.

2. Membrane conductrice de protons selon la revendication 1, dans laquelle le rapport du nombre d'atomes métalliques au nombre d'atomes de carbone dans la structure composite organique-inorganique (α) est compris dans la plage allant de 2:1 à 1:25.

3. Membrane conductrice de protons selon la revendication 1 ou 2, dans laquelle l'atome métallique dans la structure composite organique-inorganique (α) est un atome de silicium.

4. Membrane conductrice de protons selon l'une quelconque des revendications 1 à 3, dans laquelle la porosité de la structure poreuse est comprise dans la plage allant de 20 à 95 % en volume par rapport au support comprenant la structure composite organique-inorganique (α).

5. Membrane conductrice de protons selon l'une quelconque des revendications 1 à 4, dans laquelle le diamètre des pores est de 0,01 à 10 μm.

6. Membrane conductrice de protons selon l'une quelconque des revendications 1 à 5, dans laquelle <u>a</u> dans la formule numérique (III) est 3,0.

7. Membrane conductrice de protons selon l'une quelconque des revendications 1 à 6, dans laquelle $R^3$ dans la formule (3) est une structure représentée par la formule (12) suivante:

$$-(CH_2)_n-SO_3H \qquad (12)$$

dans laquelle n représente un nombre entier de 1 à 20.

**8.** Membrane conductrice de protons selon l'une quelconque des revendications 1 à 6, dans laquelle la structure conductrice de protons (β) comprend une structure de liaison métal-oxygène (B) reliée à la structure de formule (3) par une liaison métal-oxygène en plus de la structure contenant un groupe acide représentée par la formule (3).

**9.** Membrane conductrice de protons selon la revendication 8, dans laquelle la structure de liaison métal-oxygène (B) comprend une structure composite organique-inorganique (2) représentée par la formule suivante:

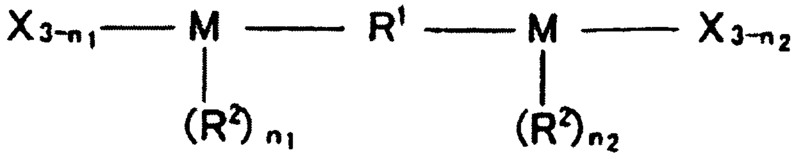

• • • (2)

dans laquelle M représente un atome de silicium ; X représente -O-liaison prenant part à la réticulation ou un groupe OH ; $R^1$ représente une chaîne moléculaire contenant de 1 à 50 atomes de carbone ; $R^2$ représente l'un quelconque des groupes méthyle, éthyle, propyle et phényle ; et n1 et n2 représentent chacun 0, 1 ou 2.

**10.** Membrane conductrice de protons selon la revendication 8, dans laquelle la structure de liaison métal-oxygène (B) comprend une structure représentée par la formule (6) suivante :

$$M(R^2)_m(X)_{4-m} \qquad (6)$$

dans laquelle M représente un atome métallique ; X représente -O-liaison prenant part à la réticulation ou un groupe OH ; $R^2$ représente l'un quelconque des groupes méthyle, éthyle, propyle et phényle ; et m représente 0, 1 ou 2.

**11.** Membrane conductrice de protons selon la revendication 10, dans laquelle M dans la formule (6) est un atome de silicium.

**12.** Membrane conductrice de protons selon la revendication 10, dans laquelle m dans la formule (6) est 0.

**13.** Procédé de fabrication d'une membrane conductrice de protons selon la revendication 1, dans lequel la structure composite organique-inorganique (α) est fabriquée par un procédé comprenant une étape de préparation d'un mélange contenant un composé réticulable composite organique-inorganique (C) se terminant par un groupe silyle réticulable et un groupe carboné relié de manière covalente à ce dernier, une étape de formation dudit mélange en un film et une étape de soumission du groupe silyle réticulable contenu dans le film former à partir du mélange à une hydrolyse et/ou une condensation, suivi par
une étape de remplissage de la structure composite organique-inorganique (α) avec un mélange comprenant un composé contenant un groupe acide (D) contenant au moins un groupe silyle réticulable et un groupe acide puis la soumission du groupe silyle réticulable contenu dans le mélange qui a ainsi rempli la structure (α) à une hydrolyse et/ou une condensation pour former une structure réticulée d'une structure conductrice de protons (β) à l'intérieur de la structure composite organique-inorganique (α),
dans lequel le composé réticulable composite organique-inorganique (C) est représenté par la formule (4) suivante:

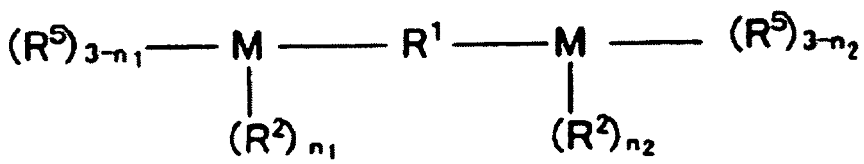

• • • (4)

dans laquelle M représente un atome de silicium ; $R^1$ représente une chaîne moléculaire contenant de 1 à 50 atomes de carbone ; $R^2$ représente l'un quelconque des groupes méthyle, éthyle, propyle et phényle ; $R^5$ représente l'un quelconque de Cl, OH, $OCH_3$, $OC_2H_5$, $OC_3H_7$, $OC_4H_9$, $OC_6H_5$ et $OCOCH_3$ ; et n1 et n2 représentent chacun 0, 1 ou 2, à condition qu'au moins un de n1 et n2 soit 1 ou 2, et

dans lequel le nombre de groupes hydrolysables dans le composé réticulé composite organique-inorganique (C) représenté par la formule (4) est représenté par la formule numérique (II) suivante:

$$\sum_{i=1}^{P} m_i\{6-(n_1^i+n_2^i)\}=a$$

$$a : 2{,}9 < a < 3{,}5 \qquad \text{(II)}$$

dans laquelle P est le nombre de types de composés réticulables composites organiques-inorganiques (C) qui est un nombre entier valant 1 ou plus; i représente un nombre entier de 1 à P ; $n1^i$et $n2^i$ représentent respectivement n1 et n2 dans la formule (4) du composé réticulable composite organique-inorganique (C)i, chacun étant 0, 1 ou 2, à condition qu'au moins un de $n1^i$ et $n2^i$ soit 1 ou 2 ; et $m_i$ représente une fraction molaire.

**14.** Procédé de fabrication d'une membrane conductrice de protons selon la revendication 13, dans lequel a dans la formule numérique (II) est 3,0.

**15.** Procédé de fabrication d'une membrane conductrice de protons selon la revendication 13, comprenant en outre une étape d'ajout d'un catalyseur en une quantité telle que de l'eau est présente en une quantité de 0,5 à 1,5 équivalent au groupe silyle réticulable dans le composé réticulable composite organique-inorganique (C).

**16.** Procédé de fabrication d'une membrane conductrice de protons selon la revendication 13, dans lequel un acide de Bronsted est utilisé en tant que catalyseur pendant l'hydrolyse du groupe silyle réticulable dans le composé réticulable composite organique-inorganique (C).

**17.** Procédé de fabrication d'une membrane conductrice de protons selon la revendication 13, comprenant en outre une étape de mélange du composé réticulable composite organique-inorganique (C) avec un solvant en une quantité allant de 0,5 à 10 ml par gramme de la teneur en solide du composé réticulable composite organique-inorganique (C).

**18.** Procédé de fabrication d'une membrane conductrice de protons selon la revendication 13, dans lequel le composé contenant un groupe acide (D) possède une structure représentée par la formule (7) suivante:

$$\begin{array}{c} (R^6)_{3-m}-\underset{\displaystyle (R^4)_m}{\underset{|}{Si}}-R^3 \end{array} \qquad (7)$$

dans laquelle $R^6$ représente l'un quelconque de OH, $OCH_3$, $OC_2H_5$ et $OC_3H_7$; $R^3$ représente une chaîne moléculaire comprenant au moins un groupe acide ; $R^4$ représente l'un quelconque des groupes méthyle, éthyle, propyle et phényle ; et m représente 0, 1 ou 2.

**19.** Procédé de fabrication d'une membrane conductrice de protons selon la revendication 13, dans lequel le composé contenant un groupe acide (D) possède une structure représentée par la formule (8) suivante:

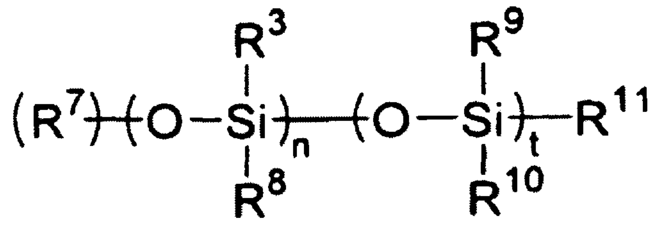

(8)

dans laquelle $R^3$ représente une chaîne moléculaire comprenant au moins un groupe acide ; $R^7$ représente un groupe sélectionné dans le groupe constitué par H, $CH_3$, $C_2H_5$, $C_3H_7$, $C_4H_9$ et $C_6H_5$ qui peut posséder une structure ramifiée qui constitue partiellement une liaison -Si ou une structure annulaire intramoléculaire ; $R^8$, $R^9$, $R^{10}$ et $R^{11}$ représentent chacun un groupe sélectionné dans le groupe constitué par $R^3$, OH, $OCH_3$, $OC_2H_5$, $OC_3H_7$, $OC_4H_9$, $OC_6H_5$, $CH_3$, $C_2H_5$, $C_3H_7$, $C_4H_9$ et $C_6H_5$ qui constitue partiellement une liaison -OSi ou une structure annulaire intramoléculaire ; n représente un nombre entier de 1 à 50 ; t représente un nombre entier de 0 à 50, à condition que la somme de n et t ne soit pas supérieure à 100; et le composé peut être une combinaison de composés dans lesquels n et t sont identiques ou différents.

**20.** Procédé de fabrication d'une membrane conductrice de protons selon la revendication 18 ou 19, dans lequel $R^3$ dans la formule (7) ou (8) est une structure représentée par la formule (12) suivante:

$$-(CH_2)_n-CO_3H \qquad (12)$$

dans laquelle n représente un nombre entier de 1 à 20.

**21.** Procédé de fabrication d'une membrane conductrice de protons selon l'une quelconque des revendications 13 à 20, dans lequel le mélange remplissant la structure composite organique-inorganique ($\alpha$) comprend un composé réticulable (F) représenté par la formule (16) suivant en plus du composé contenant un groupe acide (D) contenant un groupe silyle réticulable et un groupe acide:

$$M(R^2)_m(R^5)_{4-m} \qquad (16)$$

dans laquelle M représente un atome métallique ; $R^5$ représente l'un quelconque de OH, $OCH_3$, $OC_2H_5$, $OC_3H_7$, $OC_4H_9$, $OC_6H_5$, Cl et $OCOCH_3$ ; $R^2$ représente l'un quelconque des groupes méthyle, éthyle, propyle et phényle ; et m représente 0, 1 ou 2.

**22.** Procédé de fabrication d'une membrane conductrice de protons, dans lequel la membrane conductrice de protons ($\beta$) selon la revendication 1 est fabriquée par un procédé comprenant une étape de remplissage de la structure composite organique-inorganique ($\alpha$) avec un mélange comprenant un composé contenant un précurseur d'un groupe acide (E) contenant au moins un groupe silyle réticulable et un groupe précurseur acide susceptible d'être converti en un groupe acide puis de soumission du groupe silyle réticulable contenu dans le mélange qui a ainsi rempli la structure ($\alpha$) à une hydrolyse et/ou une condensation pour former une structure réticulée et une étape de soumission du précurseur d'un groupe acide dans le composé contenant un précurseur d'un groupe acide (E) à une oxydation et/ou une hydrolyse pour produire un groupe acide, formant ainsi une structure conductrice de protons ($\beta$) possédant un groupe acide à l'intérieur de la structure composite organique-inorganique ($\alpha$).

**23.** Procédé de fabrication d'une membrane conductrice de protons selon la revendication 22, dans lequel le composé contenant un précurseur d'un groupe acide (E) possède une structure représentée par la formule (17) suivante:

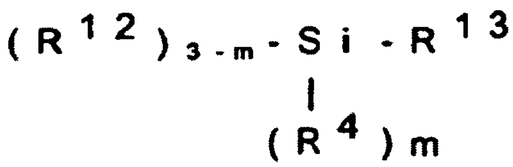

(17)

dans laquelle $R^{12}$ représente l'un quelconque de OH, $OCH_3$, $OC_2H_5$ et $OC_3H_7$ $R^{13}$ représente une chaîne moléculaire comprenant au moins un précurseur d'un groupe acide ; $R^4$ représente l'un quelconque des groupes méthyle, éthyle, propyle et phényle; et m représente 0, 1 ou 2.

**24.** Procédé de fabrication d'une membrane conductrice de protons selon la revendication 22, dans lequel le composé contenant un précurseur d'un groupe acide (E) possède une structure représentée par la formule chimique (13) suivante:

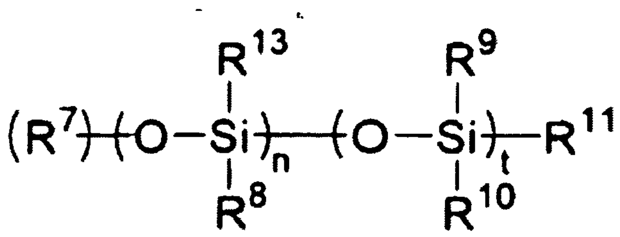

(13)

dans laquelle $R^{13}$ représente une chaîne moléculaire comprenant au moins un précurseur d'un groupe acide ; $R^7$ représente un groupe sélectionné dans le groupe constitué par H, $CH_3$, $C_2H_5$, $C_3H_7$, $C_4H_9$ et $C_6H_5$ qui peut posséder une structure ramifiée qui constitue partiellement une liaison -Si ou une structure annulaire intramoléculaire ; $R^8$, $R^9$ $R^{10}$ et $R^{11}$ représentent chacun un groupe sélectionné dans le groupe constitué par $R^{13}$, OH, $OCH_3$, $OC_2H_5$, $OC_3H_7$, $OC_4H_9$, $OC_6H_5$, $CH_3$, $C_2H_5$, $C_3H_7$, $C_4H_9$ et $C_6H_5$ qui constitue partiellement une liaison -OSi ou une structure annulaire intramoléculaire ; n représente un nombre entier de 1 à 50 ; t représente un nombre entier de 0 à 50, à condition que la somme de n et t ne soit pas supérieure à 100 ; et le composé peut être une combinaison de composés dans lesquels n et t sont identiques ou différents.

**25.** Procédé de fabrication d'une membrane conductrice de protons selon la revendication 23 ou 24, dans lequel $R^3$ dans la formule (16) ou (13) est une structure représentée par la formule (15) suivante:

$$-(C_H2)_n\text{-}SH \qquad (15)$$

dans laquelle n représente un nombre entier de 1 à 20.

**26.** Procédé de fabrication d'une membrane conductrice de protons selon l'une quelconque des revendications 22 à 25, dans lequel la structure conductrice de protons (β) remplissant la structure composite organique-inorganique (α) comprend un composé réticulable (F) représenté par la formule (14) suivante en plus du composé contenant un précurseur d'un groupe acide (E).

$$M(R^2)_m(R^6)_{4-m} \qquad (14)$$

dans laquelle M représente un atome métallique ; $R^6$ représente l'un quelconque de OH, $OCH_3$, $OC_2H_5$, $OC_3H_7$, $OC_4H_9$, $Oc_6H_5$, Cl et $OCOCH_3$; $R^2$ représente l'un quelconque des groupes méthyle, éthyle, propyle et phényle ; et m représente 0, 1 ou 2.

**27.** Pile à combustible comprenant une membrane conductrice de protons selon l'une quelconque des revendications 1 à 12.

Fig. 1

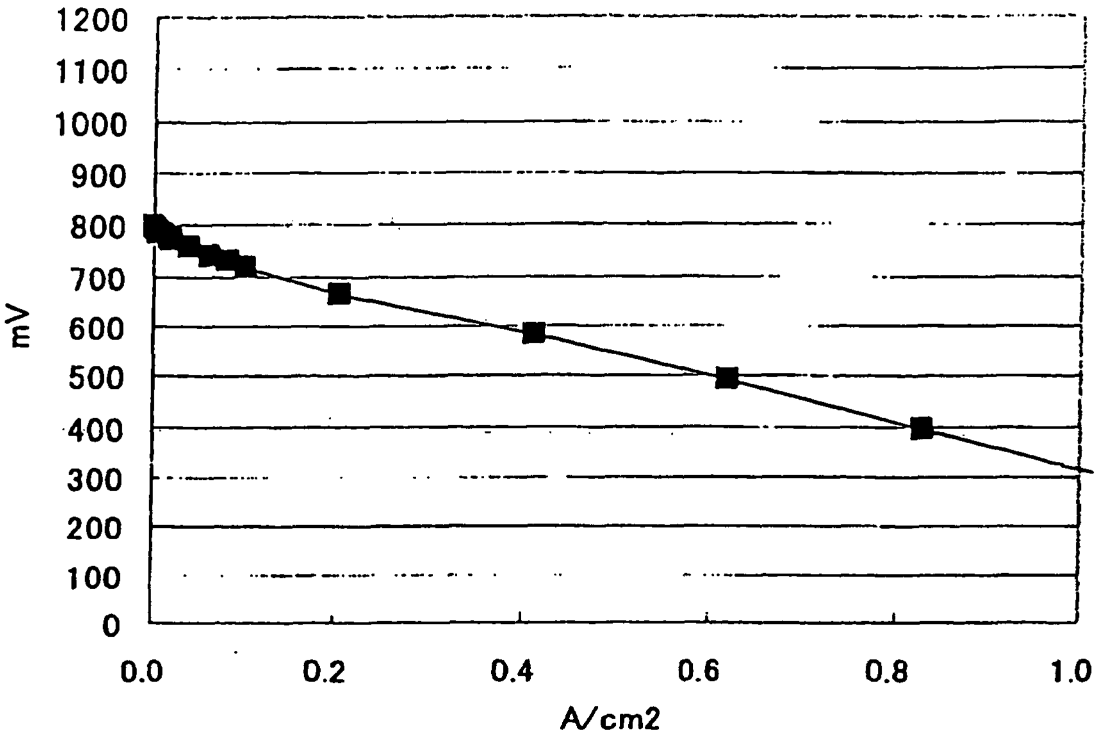
1200
1100
1000
900
800
700
600
500
400
300
200
100
0
mV
0.0
0.2
0.4
0.6
0.8
1.0
A/cm2

Fig. 2

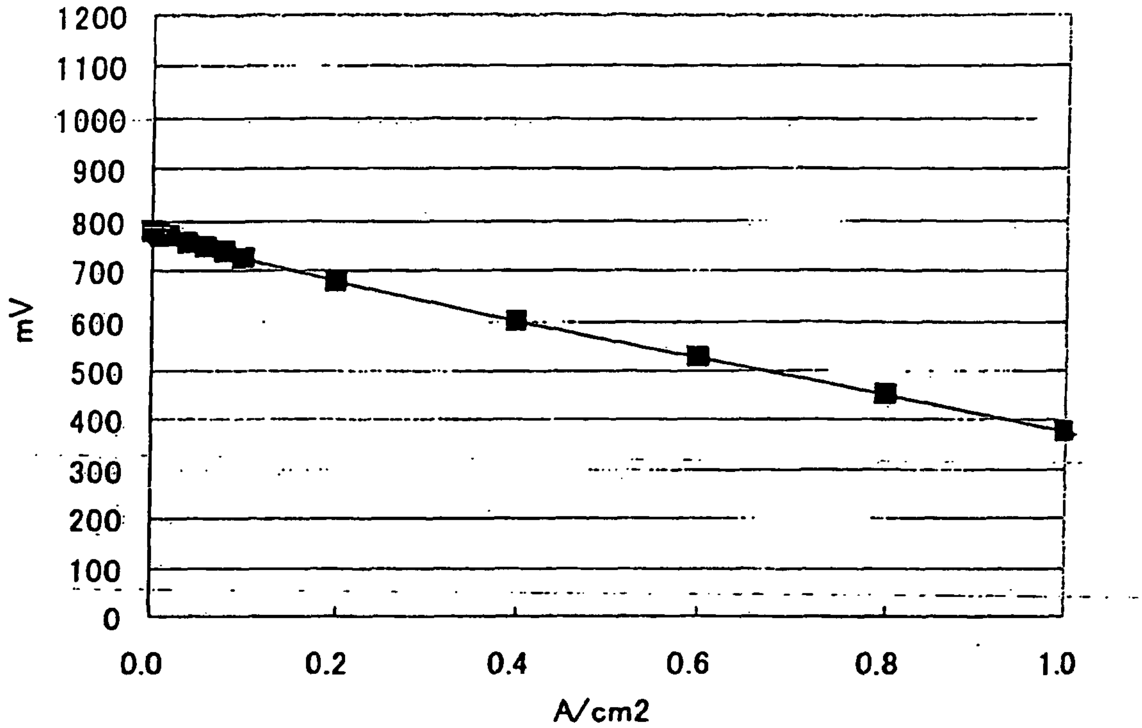
1200
1100
1000
900
800
700
600
500
400
300
200
100
0
mV
0.0
0.2
0.4
0.6
0.8
1.0
A/cm2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3282875 A
- JP 4366137 A
- JP 6342665 A
- JP 9110982 A
- JP 10021943 A
- JP 10045913 A
- JP 9087510 A
- JP 8249923 A
- JP 10069817 A
- JP 10092444 A
- US 6242135 B
- JP 2002358979 A
- JP 2002083612 A
- JP 54138522 A
- US 4152165 A
- JP 9040911 A
- JP 8134219 A
- JP 20023C149 A
- US 3775452 A
- JP TOKUGAN2003122766 B
- JP TOKUGAN20049471 B


### Non-patent literature cited in the description


- *Solid State Ionics,* 1994, vol. 74, 105
- **Ogata et al.** *Polymer Preprint, Japan,* 1997, vol. 46, 1, 867
- *Journal of Polymer Science: Part A: Polymer Chemistry,* 1995, vol. 33, 751-754
- *Journal of Polymer Science: Part A: Polymer Chemistry,* 1999, vol. 37, 1017-1026
- Jikken Kagaku Koza (Institute of Experimental Chemistry). 1, 775